# EUROPÄISCHE PATENTSCHRIFT

(11) **EP 3 066 791 B1**
(45) Veröffentlichungstag und Bekanntmachung des Hinweises auf die Patenterteilung: **26.09.2018**
(21) Anmeldenummer: 14795633.8
(22) Anmeldetag: 07.11.2014
(51) Int. Cl.: H04L 12/28, H04L 12/40, H04L 12/46, H04L 29/08

(54) **NETZWERKSYSTEM, KOPPELEINHEIT UND VERFAHREN ZUM BETREIBEN EINES NETZWERKSYSTEMS**
NETWORK SYSTEM, COUPLING UNIT, AND METHOD FOR OPERATING A NETWORK SYSTEM
SYSTÈME DE RÉSEAU, UNITÉ DE COUPLAGE ET PROCÉDÉ POUR FAIRE FONCTIONNER UN SYSTÈME DE RÉSEAU

(30) Priorität: 07.11.2013 DE 102013018596
(43) Veröffentlichungstag der Anmeldung: 14.09.2016
(73) Patentinhaber: Phoenix Contact GmbH & Co. KG, 32825 Blomberg (DE)
(72) Erfinder: WEßELMANN, Matthias, 31832 Springe (DE); KUSCHKE, Detlev, 32816 Schieder-Schwalenberg (DE); CHRIST, Fabian, 33098 Paderborn (DE)
(74) Vertreter: Blumbach · Zinngrebe Patent- und Rechtsanwälte
(86) Internationale Anmeldenummer: PCT/EP2014/074044
(87) Internationale Veröffentlichungsnummer: WO 2015/067756

(56) Entgegenhaltungen:
- EP-A1- 2 528 302
- US-A1- 2013 086 245

## Beschreibung

Die Erfindung betrifft ein Netzwerksystem, welches eine erste Netzwerkinfrastruktur mit wenigstens einem ersten, als Steuerungseinrichtung ausgebildeten Netzwerkteilnehmer und wenigstens einer Koppeleinheit aufweist, über welche die erste Netzwerkinfrastruktur mit einer Cloud-Computing-Infrastruktur mit wenigstens einer Cloud-Computing-basierenden Applikation in Verbindung steht. Des weiteren betrifft die Erfindung eine Koppeleinheit und ein Verfahren zum Betreiben eines Netzwerksystems.

Bei dem Netzwerksystem handelt es sich zum Beispiel um ein Netzwerksystem der Automatisierungstechnik. Hier ist seit einiger Zeit der Trend zu beobachten, dass konventionelle Feldbussysteme zunehmend durch Ethernet-basierende Systeme wie beispielsweise Profinet oder Ethercat ersetzt oder ergänzt werden. Ethernet-basierende Systeme, welche wie herkömmliche Feldbussysteme auch für eine echtzeitfähige Datenübertragung ausgebildet sein können, ermöglichen eine einheitliche Netzstruktur von der Prozessleitebene bis zu den Feldgeräten in industriellen Produktionsanlagen. Dieser Trend wird als vertikale Integration der Automatisierungstechnik bezeichnet und bei Ethernet-basierende Netzwerksysteme der Automatisierungstechnik ist allgemein auch von Industrial Ethernet die Rede. In Netzwerksystemen der Automatisierungstechnik werden insbesondere Prozess-, und Diagnosedaten sowie ggf. auch weitere Daten zwischen den Netzwerkteilnehmern, bei welchen es sich beispielsweise um Feldgeräte und Steuerungen handelt, zyklisch oder auch azyklisch übertragen.

Die Netzwerkinfrastruktur eines Netzwerksystems der Automatisierungstechnik, insbesondere eines Feldbusses, ist in der Regel geografisch limitiert, das heißt zum Beispiel auf einen Produktionsstandort lokal begrenzt. Nur selten lässt sich die Netzwerkinfrastruktur eines Netzwerksystems der Automatisierungstechnik über einen Produktionsstandort hinaus ausprägen. Zur Kopplung zweier oder mehrerer Netzwerkinfrastrukturen bzw. Subnetze an verschiedenen Produktionsstandorten und also zur Bildung eines standortübergreifenden Netzwerksystems wird häufig ein sogenanntes virtuelles privates Netzwerk (VPN, engl.: virtual private network) errichtet. Dabei sind die Subnetze der einzelnen Standorte (LAN, engl. local area network) über ein VPN-Gateway an ein Weitverkehrsnetz (WAN, engl. wide area network) wie beispielsweise das Internet angeschlossen, wobei zwischen den VPN-Gateways eine durch Verschlüsselungsmechanismen gesicherte Datenverbindung aufgebaut wird, die auch als VPN-Tunnel bezeichnet wird.

Innerhalb eines Subnetzes kommunizieren die Netzwerkteilnehmer gemäß wenigstens einem gemeinsamen Kommunikationsprotokoll. Selbst wenn in den Subnetzen zweier Standorte das gleiche Kommunikationsprotokoll vorgesehen ist, erfolgt die Datenübertragung zwischen den beiden Subnetzen über den VPN-Tunnel häufig gemäß eines sogenannten Fernwirkprotokolls. Bei Netzwerksystemen der Automatisierungstechnik ist das Fernwirkprotokoll in wenigstens einer Steuerung des jeweiligen Subnetzes einzurichten, so dass Daten zwischen den Steuerungen verschiedener Subnetze gemäß Fernwirkprotokoll über den VPN-Tunnel übertragen werden können.

Um ein Netzwerksystem mit an wenigstens zwei voneinander entfernten Standorten ausgebildeten Subnetzen gemäß dem beschriebenen herkömmlichen Ansatz in Betrieb zunehmen, bedarf es allerdings einen hohen Aufwand der Administration bzw. Konfiguration.

Zunächst muss an jedem der Standorte die jeweilige Netzwerkinfrastruktur mit ihren Netzwerkteilnehmern eingerichtet werden, insbesondere muss die jeweilige Steuerung konfiguriert und in Betrieb genommen werden. Dann ist die Netzwerkinfrastruktur jedes Standortes an ein Weitverkehrsnetz wie etwa das Internet anzuschließen. In den Steuerungen der über das Weitverkehrsnetz verbundenen Netzwerkinfrastrukturen ist ein Fernwirkprotokoll einzurichten, gemäß welchem die Steuerungen über das Weitverkehrsnetz untereinander Daten übertragen sollen. Da ein Fernwirkprotokoll nur selten eine verschlüsselte Datenübertragung ermöglicht, ist zusätzlich noch ein VPN-Tunnel einzurichten. Selbst wenn das Fernwirkprotokoll bereits Verschlüsselungsmechanismen bietet, können sich Probleme hinsichtlich der Adressierung ergeben. Sowohl für die Einrichtung des Fernwirkprotokolls als auch des VPN-Tunnels müssen die Adressen der Teilnehmer bekannt sein. In Weitverkehrsnetzen wie etwa dem Internet werden durch die Betreiber bzw. Anbieter meist dynamische Adressen, insbesondere öffentliche IP-Adressen, an die Netzwerkteilnehmer des Weitverkehrsnetzes vergeben, so dass sich die Adresse eines Netzwerkteilnehmers im Laufe der Zeit ändert. Die Einrichtung des Fernwirkprotokolls bzw. des VPN-Tunnels kann dann basierend auf dem Namen des jeweiligen Teilnehmers erfolgen, wobei zusätzlich, mit entsprechendem Mehraufwand, ein Dienst für dynamisches DNS (engl.: domain name system) einzurichten ist, mittels welchem dem Namen des jeweiligen Teilnehmers die jeweils aktuell gültige Adresse zugeordnet wird. Problematisch kann zudem sein, dass ein VPN-Tunnel aus Performancegründen oft nur eine relativ kleine Anzahl von Verbindungen, beispielsweise zehn Verbindungen, handhaben kann. Außerdem ermöglicht das Fernwirkprotokoll zwar eine Datenübertragung zwischen den Steuerungen an den verschiedenen Standorten, jedoch wird dadurch die Netzwerkinfrastruktur des einen Standortes nicht derart durch die Netzwerkinfrastruktur des anderen Standortes erweitert, dass die Netzwerkteilnehmer der einen Netzwerkinfrastruktur mit den Teilnehmern der anderen Netzwerkinfrastruktur Daten in der gleichen Weise austauschen könnten wie mit Teilnehmern der eigenen Netzwerkinfrastruktur. Das Engineering von Automatisierungsprozessen über die Grenzen der Netzwerkinfrastruktur eines Standortes hinaus wird dadurch komplex und kompliziert. Nicht zuletzt stellt das Weitverkehrsnetz als Bindeglied zwischen den lokalen Netzwerkinfrastrukturen ein Risiko auch dahin gehend dar, dass bei Verbindungsunterbrechungen oder -ausfällen der gesamte Automatisierungsprozess stoppen würde, da Teile des Netzwerksystems, also das entfernte Subnetz und seine Netzwerkteilnehmer, nicht mehr erreichbar wären. Bei einem Profinet-basierenden Netzwerksystem würde beispielsweise ein sogenannter Watchdog-Timer auslösen, wenn bestimmte Daten nicht innerhalb einer protokollspezifisch definierten Zeitspanne bzw. nicht zu einem protokollspezifisch definierten Zeitpunkt vorliegen.

Als ein weiterer Trend bei Netzwerksystemen im Allgemeinen und Netzwerksystemen der Automatisierungstechnik im Speziellen ist die Kopplung von Netzwerkinfrastrukturen mit Cloud-Computing-Infrastrukturen zu beobachten, bei welchen es sich um abstrahierte IT-Infrastrukturen handelt, die dynamisch an den jeweiligen Bedarf anpassbar sind und zum Beispiel Rechen-, Speicher- oder Netzwerkkapazitäten sowie Softwareapplikationen für die Netzwerkteilnehmer der mit der Cloud-Computing-Infrastruktur gekoppelten Netzwerkinfrastruktur bereitstellen. Die Cloud-Computing-Infrastruktur wird dabei zum Beispiel von einem Dienstleister betrieben und ist über ein WAN wie das Internat mit der lokalen Netzwerkinfrastruktur verbunden.

Aus der DE 10 2011 053 757 A1 ist zum Beispiel ein Verfahren zur Generierung und Handhabung von Komponenten-Applikationen für physische Komponenten eines Steuerungssystems wie zum Beispiel eine programmierbare Steuerungseinheit bekannt. Dabei ist vorgesehen, dass die Komponenten-Applikationen verteilt in einer Cloud-basierenden Umgebung generiert werden, wobei jede der Komponenten-Applikationen in einem die physische Komponente repräsentierenden Repräsentanten in der Cloud-basierenden Umgebung durch Interaktion zwischen den Repräsentanten sowie zwischen den Repräsentanten und der zugeordneten physischen Komponente generiert wird. Die Interaktion zwischen den Repräsentanten sowie zwischen den Repräsentanten und den zugehörigen physikalischen Komponenten wird dabei durch Service-Level-Agreements (SLAs) gesteuert. Die generierten Komponenten-Applikationen können unter Berücksichtigung der Service-Level-Agreements mittels der physischen Komponente in Form der Steuerungseinheit auf die weiteren Komponenten des Steuerungssystems verteilt werden.

In ähnlicher Weise ist aus der EP 2 580 628 A1 ein Verfahren zum Integrieren von zumindest einem Feldgerät in ein Netzwerk der Automatisierungstechnik bekannt. Dabei erfolgt der Zugriff auf die Feldgeräte über eine Feldzugriffseinheit, die mit zumindest einer Automatisierungs-Integrations-Plattform und zumindest einem Web-Server eines Service-Providers kommuniziert, wobei von dem Service Provider für jedes Feldgerät ein virtuelles Abbild des Feldgeräts in einer Datenbank bereitgestellt wird. Der Service-Provider kann somit dem Betreiber der Automatisierungsanlage über Cloud-Computing-Web-Services bzw. Internet-basierende Dienste automatisch oder auf Anfrage das virtuelle Abbild des Feldgeräts mit den konkreten feldgeräte- und applikationsspezifischen Eigenschaften zur Laufzeit übermitteln und unmittelbar in das Feldgerät übertragen, so dass das Feldgerät seine Funktion in der Automatisierungsanlage ausführt, sobald es in das Netzwerk integriert wird.

Darüber hinaus ist aus der EP 2 605 096 A1 eine sicherheitsgerichtete Steuerung in Kombination mit Cloud-Computing bekannt. Diese Steuereinrichtung nimmt zyklisch jeweils sicherheitsgerichtete Eingangssignale von einem industriellen technischen Prozess in fehlersicherer Weise entgegen und übermittelt sie unter Verwendung eines fehlersicheren Protokolls über eine Anbindung an ein Rechnernetz an einen Rechnerverbund. Die Steuerung nimmt dann von dem Rechnerverbund für den industriellen technischen Prozess bestimmte sicherheitsgerichtete Steuersignale entgegen und entscheidet anhand zusätzlicher Informationen in fehlersicherer Weise, ob sie die von dem Rechnerverbund ermittelten Steuersignale als korrekt anerkennt. Je nach Ergebnis der Entscheidung steuert sie den industriellen technischen Prozess entsprechend den sicherheitsgerichteten Steuersignalen in fehlersicherer Weise oder überführt den industriellen technischen Prozess in fehlersicherer Weise in einen sicheren Zustand.

Ferner ist aus der EP 2 484 061 B1 eine skalierbare auf Cloud-Computing basierende Architektur zur Erweiterung einer unternehmenseigenen Netzwerkinfrastruktur bekannt, wobei eine nahtlose Integration von Ressourcen ermöglicht wird, indem u.a. ein logischer Kunden-Randrouter in einem Cloud-Datenzentrum in der Cloud-Topologie eingerichtet wird.

Des Weiteren ist aus der EP 2 528 302 A1 ein Cloud-fähiges virtuelles Gateway bekannt, das sich gegenüber einer Applikation innerhalb der Cloud-Umgebung als physisches Gateway, welches an einem geografischen Ort installiert ist, ausgeben kann. Das virtuelle Gateway kann von der Cloud-basierten Applikation eine Anfrage für ein Gerät an dem geografischen Ort entgegennehmen, mit dem es über eine Kommunikationssystem in Verbindung steht.

Des Weiteren beschreibt US 2013/0086245 A1 ein Datenserversystem mit Clouddatenserverfunktionen für ein Automatisierungsnetz, wobei Geräte des Automatisierungsnetzes lokal oder von fern überwacht und gesteuert werden können.

Vor diesem Hintergrund besteht eine der Erfindung zugrunde liegende Aufgabe vor allem darin, eine Möglichkeit bereitzustellen, um auf einfache Weise in eine Netzwerkinfrastruktur eines Netzwerksystems mit wenigstens einem ersten Netzwerkteilnehmer einen weiteren Netzwerkteilnehmer einbinden zu können, welcher sich physisch nicht am lokalen Standort der ersten Netzwerkinfrastruktur befindet, und welcher sich insbesondere in einer anderen, entfernten Netzwerkinfrastruktur befindet.

Erfindungsgemäß wird diese Aufgabe gelöst durch ein Netzwerksystem mit den Merkmalen nach Anspruch 1, durch eine Koppeleinheit mit den Merkmalen nach Anspruch 8 sowie durch ein Verfahren mit den Merkmalen nach Anspruch 14 gelöst.

Diese erfindungsgemäßen Gegenstände bieten viele Vorteile. Weitere vorteilhafte Ausführungsformen der erfindungsgemäßen Gegenstände ergeben sich aus den jeweiligen abhängigen Ansprüchen. Ein wesentlicher Aspekt der Erfindung liegt insbesondere in der Nutzung von Cloud-Computing-Technologien.

Das erfindungsgemäße Netzwerksystem umfasst eine erste Netzwerkinfrastruktur mit wenigstens einem ersten Netzwerkteilnehmer, der als Steuerungseinrichtung ausgebildet ist, eine Cloud-Computing-Infrastruktur mit wenigstens einer Cloud-Computing-basierenden Applikation sowie eine Koppeleinheit mit einer ersten Schnittstelle und einer zweiten Schnittstelle. Dabei steht die Koppeleinheit mittels der ersten Schnittstelle mit der ersten Netzwerkinfrastruktur in Verbindung und mittels der zweiten Schnittstelle mit der Cloud-Computing-Infrastruktur in Verbindung. Zudem ist die Koppeleinheit eingerichtet und ausgebildet, in Zusammenwirken mit der Cloud-Computing-basierenden Applikation wenigstens einen weiteren Netzwerkteilnehmer für die erste Netzwerkinfrastruktur zu emulieren, wobei zwischen dem wenigstens ersten Netzwerkteilnehmer und dem weiteren Netzwerkteilnehmer der ersten Netzwerkinfrastruktur Daten übertragen werden können. Ein wesentlicher Vorteil hierbei ist, dass der emulierte weitere Netzwerkteilnehmer für den wenigstens ersten Netzwerkteilnehmer der ersten Netzwerkinfrastruktur wie ein Netzwerkteilnehmer der gleichen Netzwerkinfrastruktur erscheint. Insbesondere kann dank der durch die Koppeleinheit ermöglichten Emulation der weitere Netzwerkteilnehmer, welcher sich physisch nicht am lokalen Standort der ersten Netzwerkinfrastruktur befindet, in die erste Netzwerkinfrastruktur eingebunden werden, ohne dass zuvor die oben erwähnten Mittel wie Fernwirkprotokoll, VPN-Tunnel und dynamisches DNS einzurichten sind, wodurch sich der Aufwand für Konfiguration, Administration und Wartung stark reduziert.

Gemäß einem weiteren Aspekt der Erfindung ist die erste Netzwerkinfrastruktur bevorzugt ein Feldbus und insbesondere ein Ethernet-basierender Feldbus.

Gemäß einem weiteren Aspekt umfasst die erste Netzwerkinfrastruktur bevorzugt wenigstens einen zweiten Netzwerkteilnehmer, der als Feldgerät, insbesondere als Sensor oder Aktor, ausgebildet ist,. Das Netzwerksystem ist also vorteilhafter Weise für den Einsatz in der Automatisierungstechnik ausgebildet und geeignet und wird hierfür nachfolgend auch als Automatisierungssystem bezeichnet.

Gemäß einem weiteren Aspekt der Erfindung ist die Koppeleinheit eine Einheit innerhalb der Steuerungseinrichtung, die Koppeleinheit kann aber auch als separate Einheit ausgeführt und somit ein zweiter oder dritter Netzwerkteilnehmer der ersten Netzwerkinfrastruktur sein, wobei in letzterem Fall der emulierte weitere Netzwerkteilnehmer ein dritter oder vierter Netzwerkteilnehmer der ersten Netzwerkinfrastruktur ist. Bevorzugt ist die Koppeleinheit in Hard- und/oder Software und besonders bevorzugt als sogenanntes Embedded Device ausgeführt. Insbesondere, wenn die Koppeleinheit als Einheit innerhalb der Steuerungseinrichtung ausgebildet ist, kann sie im Wesentlichen als Software implementiert sein, wodurch Hardwarekosten eingespart werden können.

Gemäß einem weiteren Aspekt der Erfindung können und bevorzugt werden innerhalb der ersten Netzwerkinfrastruktur zwischen allen Netzwerkteilnehmern der ersten Netzwerkinfrastruktur, insbesondere einschließlich des weiteren emulierten Netzwerkteilnehmers, Daten gemäß einem gemeinsamen ersten Kommunikationsprotokoll übertragen werden. Hinsichtlich des Kommunikationsprotokolls für eine Datenübertragung innerhalb der ersten Netzwerkinfrastruktur sind vorteilhafter Weise also keine Änderungen oder Anpassungen erforderlich, um eine Datenübertragung auch mit dem weiteren emulierten Netzwerkteilnehmer zu ermöglichen.

Gemäß einem weiteren Aspekt der Erfindung steht die Koppeleinheit mittels der zweiten Schnittstelle mit der Cloud-Computing-Infrastruktur über eine zwischengeschaltete zweite Netzwerkinfrastruktur in Verbindung, wobei es sich bei der zweiten Netzwerkinfrastruktur um ein Weitverkehrsnetz und insbesondere um das Internet handeln kann. Dabei können innerhalb der zweiten Netzwerkinfrastruktur Daten gemäß einem zweiten Kommunikationsprotokoll übertragen werden, welches sich von dem ersten Kommunikationsprotokoll unterscheiden kann.

Gemäß einem weiteren Aspekt der Erfindung steht die Cloud-Computing-Infrastruktur ferner mit einer dritten Netzwerkinfrastruktur in Verbindung, wobei die Cloud-Computing-basierende Applikation ferner mit wenigstens einem Netzwerkteilnehmer der dritten Netzwerkinfrastruktur zusammenwirkt, bei dem es sich insbesondere um ein Feldgerät, eine Steuerungseinrichtung oder einen Datenbank-Server der dritten Netzwerkinfrastruktur handelt. Bevorzugt wird dabei der Netzwerkteilnehmer der dritten Netzwerkinfrastruktur oder wenigstens ein bestimmter Dienst und/oder wenigstens eine bestimmte Funktion des Netzwerkteilnehmers der dritten Netzwerkinfrastruktur durch den emulierten weiteren Netzwerkteilnehmer in der ersten Netzwerkinfrastruktur repräsentiert. Dies bringt den Vorteil, dass es für den wenigstens ersten Netzwerkteilnehmer, in zweckmäßiger Weiterbildung auch für jeden weiteren Netzwerkteilnehmer der ersten Netzwerkinfrastruktur im Wesentlichen nicht erkennbar oder unterscheidbar ist, dass er eigentlich Daten mit einem lediglich repräsentierten Netzwerkteilnehmer austauscht, welcher sich physisch nicht am lokalen Standort der ersten Netzwerkinfrastruktur befindet.

Gemäß einem weiteren Aspekt der Erfindung ist die Cloud-Computing-basierende Applikation vorteilhafter Weise ausgebildet und geeignet, eine Bedienoberfläche für die Einrichtung der wenigstens einen Koppeleinheit bereitzustellen. Diese Bedienoberfläche kann einer Bedienperson beispielsweise an einem mit der Cloud-Computing-Infrastruktur in Verbindung stehendem Bedienterminal innerhalb einer Webbrowserumgebung präsentiert werden. Als Bedienterminal kann zum Beispiel eine PC ein Tabletcomputer oder ein Smartphone genutzt werden.

Die erfindungsgemäße Koppeleinheit für ein Netzwerksystem, weist eine erste Schnittstelle und eine zweite Schnittstelle auf, wobei die Koppeleinheit mittels der ersten Schnittstelle mit einer ersten Netzwerkinfrastruktur verbindbar ist und mittels der zweiten Schnittstelle mit einer Cloud-Computing-Infrastruktur verbindbar ist. Ferner ist die Koppeleinheit eingerichtet und ausgebildet, in Zusammenwirken mit einer Cloud-Computing-basierenden Applikation der Cloud-Computing-Infrastruktur wenigstens einen Netzwerkteilnehmer für die erste Netzwerkinfrastruktur zu emulieren.

Ein wesentlicher Vorteil hierbei ist, dass dank der durch die Koppeleinheit ermöglichten Emulation der weitere Netzwerkteilnehmer, welcher sich physisch nicht am lokalen Standort der ersten Netzwerkinfrastruktur befindet, auf einfache Weise in die erste Netzwerkinfrastruktur eingebunden werden kann. Dies ist zudem auch noch nachträglich möglich, wenn also die erste Netzwerkinfrastruktur bereits besteht bzw. bestanden hat und diese um einen weiteren Netzwerkteilnehmer, welcher sich physisch nicht am lokalen Standort der ersten Netzwerkinfrastruktur befindet, im Zuge einer Nachrüstung erweitert bzw. ergänzt werden soll.

Gemäß einem weiteren Aspekt der Erfindung sind in der Koppeleinheit eine Identifizierungsinformation der Koppeleinheit und eine Identifizierungsinformation der Cloud-Computing-Infrastruktur hinterlegt. Insbesondere sind diesbezüglich in einem Speicherbereich der Koppeleinheit eine sogenannte UID (engl. für user identifier, unit identifier oder unique identifier) der Koppeleinheit, zum Beispiel deren MAC-Adresse (engl.: media access control), und eine UID der Cloud-Computing-Infrastruktur, zum Beispiel die MAC-Adresse, die IP-Adresse oder der Name eines Servers der Cloud-Computing-Infrastruktur, hinterlegt bzw. gespeichert. Die Koppeleinheit ist somit vorteilhafter Weise bereits vorkonfiguriert für eine Verbindung mit einer vorbestimmten Cloud-Computing-Infrstruktur. Der Anbieter einer solchen Cloud-Computing-Infrstruktur kann so zum Beispiel seinen Kunden Koppeleinheiten anbieten, die für seine Cloud-Computing-Infrstruktur vorkonfiguriert sind, und den Einrichtungsaufwand für den Kunden verringern bzw. vereinfachen.

Gemäß einem weiteren Aspekt der Erfindung ist die Koppeleinheit eingerichtet und ausgebildet, das Vorhandensein einer Verbindung an der zweiten Schnittstelle zu detektieren und bei detektiertem Vorhandensein einer Verbindung an der zweiten Schnittstelle unter Verwendung der Identifizierungsinformation der Koppeleinheit und der Identifizierungsinformation der Cloud-Computing-Infrastruktur eine Datenübertragung mit der Cloud-Computing-Infrastruktur zu initiieren. Hierdurch wird der Einrichtungsaufwand nochmals reduziert, da die Koppeleinheit selbstständig versucht, die Cloud-Computing-Infrastruktur zu kontaktieren.

Gemäß einem weiteren Aspekt der Erfindung ist in der Koppeleinheit eine Sicherheitsinformation hinterlegt und die Koppeleinheit eingerichtet und ausgebildet, unter Verwendung der Sicherheitsinformation eine gesicherte Datenübertragung, und insbesondere eine verschlüsselte Datenübertragung, mit der Cloud-Computing-Infrastruktur zu initiieren. Hierdurch kann die Sicherheit der Datenübertragung deutlich gesteigert werden. Insbesondere ist diesbezüglich in einem Speicherbereich der Koppeleinheit ein sogenanntes Sicherheitszertifikat hinterlegt bzw. gespeichert. Dieses Sicherheitszertifikat kann zum Beispiel vom Anbieter der Cloud-Computing-Infrastruktur ausgestellt worden sein. Mittels dieses Sicherheitszertifikats kann zum einen sich die Koppeleinheit gegenüber der Cloud-Computing-Infrastruktur authentifizieren und also belegen, dass sie für eine Datenübertragung mit der Cloud-Computing-Infrastruktur zugelassen ist. Zum anderen kann auf Basis dieses Sicherheitszertifikats eine verschlüsselte Datenübertragung zwischen der Koppeleinheit und der Cloud-Computing-Infrastruktur erfolgen. Als Verschlüsselungsmechanismus kann dabei zum Beispiel TLS (engl.: transport layer security) vorgesehen sein.

Gemäß einem weiteren Aspekt der Erfindung stellt die Koppeleinheit ein Bestätigungselement bereit, welches aktiviert werden kann, um bei Vorhandensein einer Verbindung an der zweiten Schnittstelle eine von der Cloud-Computing-Infrastruktur initiierte Datenübertragung zu bestätigen. Hierdurch kann die Sicherheit deutlich gesteigert werden, da eine weitere Datenübertragung zwischen der Koppeleinheit und der Cloud-Computing-Infrastruktur nur nach Aktivierung des Bestätigungselements stattfinden kann. Das Bestätigungselement kann dabei in Hard- und/oder Software implementiert sein.

Gemäß einem weiteren Aspekt der Erfindung kann die Koppeleinheit als eine Einheit innerhalb einem als Steuerungseinrichtung ausgebildeten ersten Netzwerkteilnehmer der ersten Netzwerkinfrastruktur oder als separate Einheit ausgebildet sein und in letzterem Fall zumindest einen zweiten Netzwerkteilnehmer für die erste Netzwerkinfrastruktur darstellen. Bevorzugt ist die Koppeleinheit in Hard- und/oder Software und besonders bevorzugt als sogenanntes Embedded Device ausgeführt. Insbesondere wenn die Koppeleinheit als Einheit innerhalb der Steuerungseinrichtung ausgebildet ist, kann sie im Wesentlichen als Software implementiert sein, wodurch Hardwarekosten eingespart werden können.

Das erfindungsgemäße Verfahren zum Betreiben eines Netzwerksystems, welches eine erste Netzwerkinfrastruktur mit wenigstens einem ersten Netzwerkteilnehmer aufweist, umfasst die folgenden Schritte:
- Bereitstellen einer erfindungsgemäßen Koppeleinheit, welche eine erste Schnittstelle und eine zweite Schnittstelle aufweist,
- Verbinden der ersten Schnittstelle der Koppeleinheit mit der ersten Netzwerkinfrastruktur,
- Verbinden der zweiten Schnittstelle der Koppeleinheit mit einer Cloud-Computing-Infrastruktur mit wenigstens einer Cloud-Computing-basierenden Applikation,
- Emulieren eines weiteren Netzwerkteilnehmers für die erste Netzwerkinfrastruktur durch die Koppeleinheit in Zusammenwirken mit der Cloud-Computing-basierenden Applikation,
- Übertragen von Daten zwischen dem wenigstens ersten Netzwerkteilnehmer und dem weiteren Netzwerkteilnehmer.

Ein mit diesem Verfahren erreichbarer wesentlicher Vorteil hierbei ist, dass der emulierte weitere Netzwerkteilnehmer für den wenigstens ersten Netzwerkteilnehmer der ersten Netzwerkinfrastruktur wie ein Netzwerkteilnehmer der gleichen Netzwerkinfrastruktur erscheint. Insbesondere kann dank der durch die Koppeleinheit ermöglichten Emulation der weitere Netzwerkteilnehmer, welcher sich physisch nicht am lokalen Standort der ersten Netzwerkinfrastruktur befindet, in die erste Netzwerkinfrastruktur eingebunden werden, ohne dass zuvor die oben erwähnten Mittel wie Fernwirkprotokoll, VPN-Tunnel und dynamisches DNS einzurichten sind, wodurch sich der Aufwand für Konfiguration, Administration und Wartung stark reduziert.

Gemäß einem weiteren Aspekt der Erfindung werden bei dem Verfahren innerhalb der ersten Netzwerkinfrastruktur zwischen allen Netzwerkteilnehmern der ersten Netzwerkinfrastruktur, insbesondere einschließlich des weiteren emulierten Netzwerkteilnehmers, Daten gemäß einem gemeinsamen ersten Kommunikationsprotokoll übertragen. Hinsichtlich des Kommunikationsprotokolls für eine Datenübertragung innerhalb der ersten Netzwerkinfrastruktur sind vorteilhafter Weise also keine Änderungen oder Anpassungen erforderlich, um eine Datenübertragung auch mit dem weiteren emulierten Netzwerkteilnehmer zu ermöglichen.

Insbesondere für das Engineering von Automatisierungsprozessen über die Grenzen der Netzwerkinfrastruktur eines Standortes hinaus bedeutet die Erfindung und insbesondere das erfindungsgemäße Netzwerksystem, die Koppeleinheit und das Verfahren zum Betreiben eines Netzwerksystems eine wesentliche Vereinfachung.

Diese und weitere Merkmale und Vorteile ergeben sich auch aus der folgenden Beschreibung von Ausführungsbeispielen in Zusammenhang mit den beiliegenden Zeichnungen. Es zeigen
- Figur 1: eine schematische Darstellung eines Netzwerksystems gemäß Stand der Technik;
- Figur 2: eine schematische Darstellung eines Netzwerksystems in einer erfindungsgemäßen Ausführungsform, wobei die Koppeleinheit als separate Einheit ausgebildet ist und einen weiteren Netzwerkteilnehmer emuliert;
- Figur 3: eine schematische Darstellung eines Netzwerksystems in einer weiteren erfindungsgemäßen Ausführungsform, wobei die Koppeleinheit als separate Einheit ausgebildet ist und zwei weitere Netzwerkteilnehmer emuliert;
- Figur 4: eine schematische Darstellung eines Netzwerksystems in einer weiteren erfindungsgemäßen Ausführungsform, wobei die Koppeleinheit als separate Einheit ausgebildet ist und drei weitere Netzwerkteilnehmer emuliert;
- Figur 5: eine schematische Darstellung eines Netzwerksystems in einer weiteren erfindungsgemäßen Ausführungsform, wobei die Koppeleinheit als Einheit innerhalb der Steuerung ausgebildet ist und drei weitere Netzwerkteilnehmer emuliert;
- Figur 6: eine schematische Darstellung einer grafischen Bedienoberfläche einer mit der Koppeleinheit zusammenwirkenden Cloud-Computing-basierenden Applikation in verschiedenen Stadien während des Anmeldens bzw. Bekanntmachens einer Koppeleinheit;
- Figur 7: eine schematische Darstellung einer grafischen Bedienoberfläche einer mit der Koppeleinheit zusammenwirkenden Cloud-Computing-basierenden Applikation in verschiedenen Stadien während des Zuweisens eines durch die Koppeleinheit zu emulierenden Netzwerkteilnehmers; und
- Figur 8: eine schematische Darstellung einer grafischen Bedienoberfläche einer mit der Koppeleinheit zusammenwirkenden Cloud-Computing-basierenden Applikation in verschiedenen Stadien während des Anmeldens bzw. Bekanntmachens eines Netzwerkteilnehmers bei der Cloud-Computingbasierende Applikation.

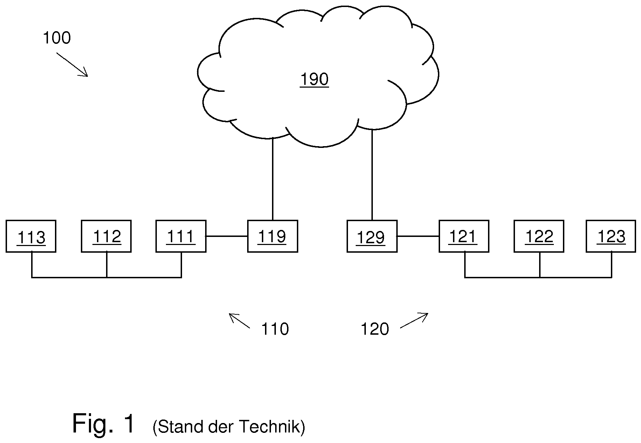

Die **Figur 1** zeigt beispielhaft eine schematische Darstellung eines Netzwerksystems 100 gemäß Stand der Technik. Das Netzwerksystem 100 umfasst eine Netzwerkinfrastruktur 110, die an einem ersten Standort installiert ist, und eine Netzwerkinfrastruktur 120, die an einem zweiten Standort installiert ist, der von der ersten Standort geografisch entfernt liegt.

Die Netzwerkinfrastruktur 110 umfasst als Netzwerkteilnehmer eine Steuerungseinrichtung 111 sowie z.B. zwei Feldgeräte 112 und 113 eines automatisierten industriellen Prozesses, die hier über einen Ethernetbasierenden Bus, z.B. einen Profinet-basierenden Bus miteinander verbunden sind und über diesen untereinander Prozessdaten, Diagnosedaten und weitere Daten übertragen.

In ähnlicher Weise umfasst die Netzwerkinfrastruktur 120 als Netzwerkteilnehmer eine Steuerungseinrichtung 121 sowie zwei Feldgeräte 122 und 123 eines automatisierten industriellen Prozesses, die hier z.B. ebenfalls über einen Profinet-basierenden Bus miteinander verbunden sind und über diesen untereinander Prozessdaten, Diagnosedaten und weitere Daten übertragen.

Damit Daten auch Standort übergreifend übertragen werden können und in der Netzwerkinfrastruktur am jeweils anderen Standort nutzbar sind, ist die Netzwerkinfrastruktur 110 mittels einer VPN-Gatewayeinrichtung 119 und die Netzwerkinfrastruktur 120 mittels einer VPN-Gatewayeinrichtung 129 jeweils an die als Weitverkehrsnetz ausgebildete Netzwerkinfrastruktur 190, welche hier z.B. das Internet ist, angeschlossen und somit miteinander verbunden. Wie eingangs bereits beschrieben, dienen die beiden VPN-Gatewayeinrichtungen 119 und 129 zur Bereitstellung eines geschützten als VPN-Tunnel bezeichneten Kommunikationskanals zwischen den Netzwerkinfrastrukturen der beiden Standorte, so dass Daten sicher und insbesondere verschlüsselt über das an sich unsichere Weitverkehrsnetz übertragbar sind.

Zwar bilden die Netzwerkinfrastrukturen 110 und 120 somit gewissermaßen Subnetze des Netzwerksystems 100. Jedoch können die Netzwerkteilnehmer der Netzwerkinfrastruktur 110 über den Kommunikationskanal des VPN-Tunnels Daten nicht unmittelbar mit den Netzwerkteilnehmern der Netzwerkinfrastruktur 120 austauschen. Vielmehr findet der Datenaustausch nur zwischen den Steuerungseinrichtungen 111 und 121 statt, und zwar gemäß eines speziellen sogenannten Fernwirkprotokolls, zum Beispiel nach IEC 60870 Standard, welches hierfür auf den Steuerungseinrichtungen 111 und 121 eingerichtet wurde. Somit kommuniziert zum Beispiel die Steuerungseinrichtung 111 mit den Feldgeräten 112 und 113 ihrer lokalen Netzwerkinfrastruktur 110 gemäß eines Profinet-spezifischen Protokolls, während sie mit der Steuerungseinrichtung 121 der entfernten Netzwerkinfrastruktur 120 gemäß des Fernwirkprotokolls kommuniziert. Im netzwerktechnischen Sinne ist die Kopplung der Subnetz somit nicht transparent.

Wie eingangs beschrieben, ist bei diesem herkömmlichen Ansatz zur Inbetriebnahme eines Netzwerksystems mit an wenigstens zwei voneinander entfernten Standorten ausgebildeten Subnetzen zudem der Aufwand hinsichtlich Einrichtung, Administration bzw. Konfiguration sehr hoch.

Nicht zuletzt birgt das Weitverkehrsnetz 190 als Bindeglied zwischen den lokalen Netzwerkinfrastrukturen 110 und 120 das Risiko, dass bei Verbindungsunterbrechungen oder - ausfällen der gesamte Automatisierungsprozess stoppen würde, da Teile des Netzwerksystems, also das entfernte Subnetz und seine Netzwerkteilnehmer, nicht mehr erreichbar wären. Bei einem Profinet-basierenden Netzwerksystem würde beispielsweise ein sogenannter Watchdog-Timer auslösen, wenn bestimmte Daten nicht innerhalb einer protokollspezifisch definierten Zeitspanne bzw. nicht zu einem protokollspezifisch definierten Zeitpunkt vorliegen.

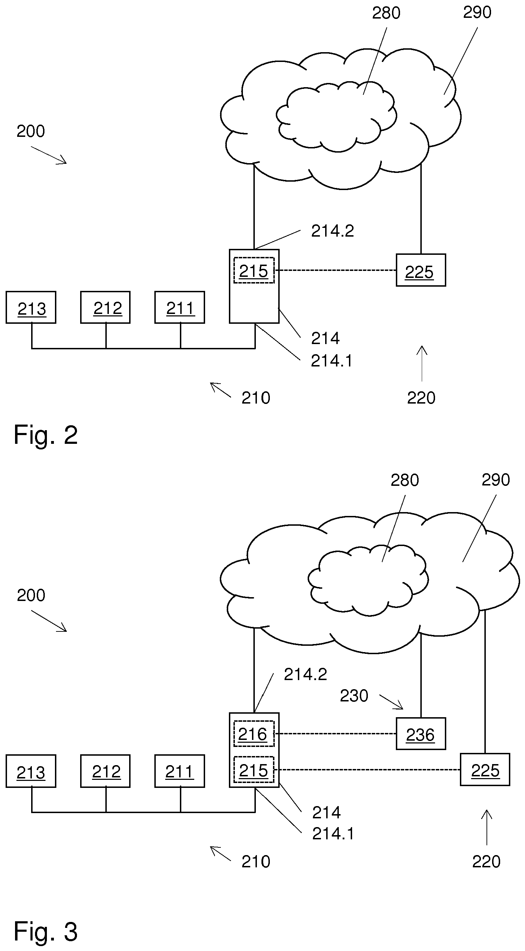

Die **Figur 2** zeigt beispielhaft eine schematische Darstellung eines Netzwerksystems 200 in einer erfindungsgemäßen Ausführungsform.

Das Netzwerksystem 200 umfasst eine Netzwerkinfrastruktur 210, die an einem ersten Standort installiert ist und als einen ersten Netzwerkteilnehmer eine Steuerungseinrichtung 211 sowie bevorzugt als zweite Netzwerkteilnehmer zwei Feldgeräte 212 und 213 eines automatisierten industriellen Prozesses umfasst, die hier über einen Profinet-basierenden Bus miteinander verbunden sind und über diesen untereinander Prozessdaten, Diagnosedaten und weitere Daten übertragen. Das Netzwerksystem 200 ist also vorteilhafter Weise für den Einsatz in der Automatisierungstechnik ausgebildet und geeignet und kann demnach auch als Automatisierungssystem bezeichnet werden.

Zudem ist eine Koppeleinheit 214 vorgesehen, welche hier als separate Einheit ausgebildet ist. Die Koppeleinheit 214 ist mir ihrer ersten Schnittstelle 214.1 mit der Netzwerkinfrastruktur 210 und insbesondere mit dem Bus der Netzwerkinfrastruktur 210 verbunden. Über ihre zweite Schnittstelle 214.2 steht die Koppeleinheit 214 mit einer Cloud-Computing-Infrastruktur 280 in Verbindung. Cloud-Computing-Infrastrukturen sind an sich, wie auch eingangs bereits erwähnt, aus dem Stand der Technik bekannt. Die Cloud-Computing-Infrastruktur 280 ist in diesem Beispiel an das Weitverkehrsnetz 290 angeschlossen. Auch die Koppeleinheit 214 ist mit ihrer zweiten Schnittstelle 214.2 an das Weitverkehrsnetz 290 angeschlossen und ist somit auch mit der Cloud-Computing-Infrastruktur 280 verbunden.

An einem zweiten Standort, der geografisch entfernt von dem ersten Standort liegt, ist eine weitere Netzwerkinfrastruktur 220 installiert, von der in Figur 2 nur ein Netzwerkteilnehmer 225 gezeigt ist, bei dem es sich um ein Feldgerät oder eine Steuerung für einen automatisierten industriellen Prozess handeln kann. Dieser Netzwerkteilnehmer 225 ist ebenfalls an das Weitverkehrsnetz 290 angeschlossen und ist somit auch mit der Cloud-Computing-Infrastruktur 280 verbunden.

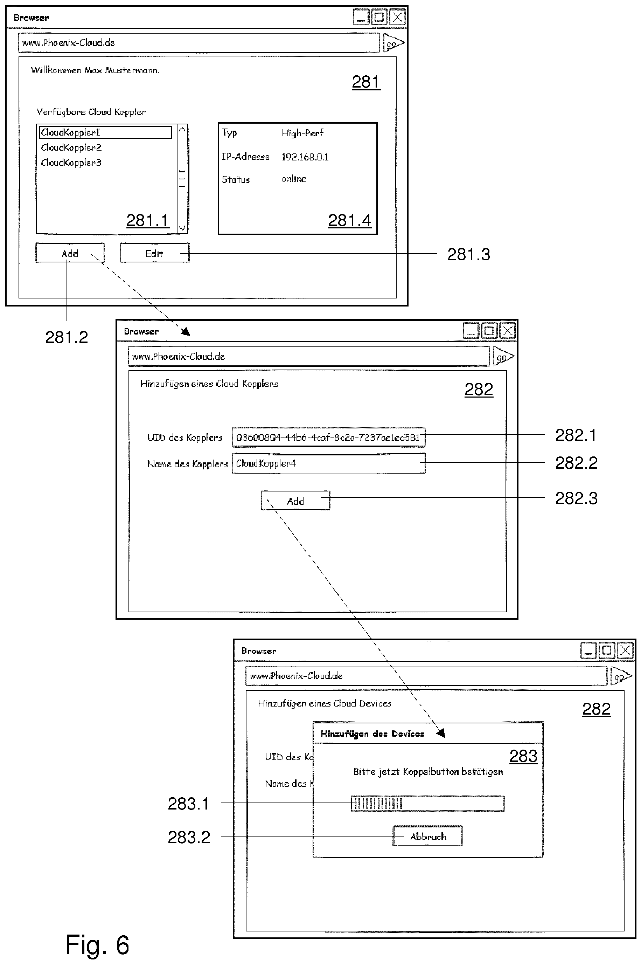

Um nun den Netzwerkteilnehmer 225 der entfernten Netzwerkinfrastruktur 220 in die Netzwerkinfrastruktur 210 derart einzubinden, dass eine Datenübertragung zwischen den Netzwerkteilnehmern der Netzwerkinfrastruktur 210 und dem Netzwerkteilnehmer 225 der Netzwerkinfrastruktur 220 möglich ist, ist erfindungsgemäß Folgendes vorgesehen: Von der Cloud-Computing-Infrastruktur 280 wird wenigstens eine, in den Figuren nicht näher dargestellte Cloud-Computing-basierende Applikation bereitgestellt und ausgeführt. Sowohl die Koppeleinheit 214 als auch der Netzwerkteilnehmer 225 sind dieser Cloud-Computing-basierenden Applikation bekannt gemacht bzw. bei dieser Applikation registriert. Mittels dieser Applikation ist auch eine Zuordnung des Netzwerkteilnehmers 225 zu der Koppeleinheit 214 herstellbar. Weitere Einzelheiten hinsichtlich einer solchen möglichen Cloud-Computing-basierende Applikation werden später insbesondere noch im Zusammenhang mit den Figuren 6 bis 8 erläutert. Die Koppeleinheit 214 jedenfalls ist ausgebildet, im Zusammenwirken mit der Cloud-Computing-basierenden Applikation den Netzwerkteilnehmer 225 zu emulieren und ihn somit als emulierten weiteren Netzwerkteilnehmer 215 in die Netzwerkinfrastruktur 210 einzubinden. Für die Emulation des Netzwerkteilnehmers 225 als Netzwerkteilnehmer 215 nutzt die Koppeleinheit 214 dabei zweckmäßig Gerätebeschreibungsdaten des Netzwerkteilnehmers 225, welche ihr über die Cloud-Computing-basierende Applikation zum Beispiel als GSD-Datei (engl.: general station description) im XML-basierenden GSDML-Format (engl.: GSD markup language) zur Verfügung gestellt werden. Der von der Koppeleinheit 214 emulierte weitere Netzwerkteilnehmer 215 repräsentiert sozusagen den Netzwerkteilnehmer 225 der entfernt liegenden Netzwerkinfrastruktur 220 innerhalb der Netzwerkinfrastruktur 210. Zwischen den Netzwerkteilnehmern 211, 212, 213 und dem emulierten weiteren Netzwerkteilnehmer 215 können nunmehr Daten (Prozessdaten, Diagnosedaten, Alarming, etc.) übertragen werden, und zwar zweckmäßig, ohne dass diese hierfür zunächst zwischen den Netzwerkteilnehmern 215 und 225 ausgetauscht werden müssen. So kann auch der Netzwerkteilnehmer 215 zweckmäßig je nach spezifischen Gerätebeschreibungsdaten selbstständig eine Bearbeitung und/oder (Rück-)Übertragung von Eingangs- und/oder Ausgangsdaten durchführen, z.B. auch basierend auf von den Netzwerkteilnehmern 211, 212, 213 erhaltene Daten.

Die Koppeleinheit 214 sorgt dabei jedoch zweckmäßig ferner dafür, dass Ausgangsdaten des Netzwerkteilnehmers 225 auch zum Netzwerkteilnehmer 215 weitergeleitet werden und daraufhin als dessen Ausgangsdaten in der Netzwerkinfrastruktur 210 bereitstehen. Umgekehrt sorgt die Koppeleinheit 214 zweckmäßig auch dafür, dass Eingangsdaten für den Netzwerkteilnehmer 215 auch zum Netzwerkteilnehmer 225 weitergeleitet werden. Diese logische Verbindung zwischen dem Netzwerkteilnehmer 225 und dem emulierten Netzwerkteilnehmer 215 ist in der Figur 2 als gestrichelte Linie dargestellt. Somit stehen aktuelle Eingangsdaten für den Netzwerkteilnehmer 215 mit zeitlichen Versatz auch dem Netzwerkteilnehmer 225 sowie aktuellen Ausgangsdaten des Netzwerkteilnehmers 225 mit zeitlichen Versatz auch dem Netzwerkteilnehmer 215 zur Verfügung.

Da jedoch zweckmäßig auch der emulierte Netzwerkteilnehmer 215 eine selbstständige Datenbearbeitung und/oder -übertragung innerhalb der Netzwerkinfrastruktur 210 durchführen kann, ohne dass hierfür Daten zunächst zwischen den Netzwerkteilnehmern 215 und 225 ausgetauscht werden müssen, ist eine Gültigkeit der innerhalb der Netzwerkinfrastruktur 210 bearbeiteten und/oder übertragenen Daten von der Datenaktualisierung zwischen den Netzwerkteilnehmern 215 und 225 grundsätzlich entkoppelt und ein Automatisierungsprozess kann auch weitergeführt werden, wenn die Datenverbindung zu den entfernt liegenden Netzwerkteilnehmern gestört ist. Der von der Koppeleinheit emulierte Netzwerkteilnehmer 215 führt die selbstständige Datenbearbeitung und/oder -übertragung somit zweckmäßig stets unter Zugrundelegung der zuletzt vorliegenden Daten aus. Bedarfsweise können jedoch auch Maßnahmen getroffen werden, die das Vorliegen veralteter Daten erkennen und geeignete Sicherheitsreaktionen auslösen.

Wenn die Koppeleinheit 214 einen Netzwerkteilnehmer emuliert, so heißt das, dass sie ihn insbesondere hinsichtlich seiner Eigenschaften, seiner Funktion und/oder seines Verhaltens nachbildet und ihn somit gewissermaßen imitiert. Für die anderen Netzwerkteilnehmer erscheint der emulierte Netzwerkteilnehmer wie sein Original und wird von diesen auch entsprechend behandelt.

Ein wesentlicher Vorteil hierbei ist somit, dass der emulierte weitere Netzwerkteilnehmer 215 als Repräsentant des Netzwerkteilnehmers 225 für die Netzwerkteilnehmer der ersten Netzwerkinfrastruktur 210 wie ein Netzwerkteilnehmer der gleichen Netzwerkinfrastruktur erscheint, dass heißt, für die Netzwerkteilnehmer der Netzwerkinfrastruktur 210 ist nicht erkennbar oder unterscheidbar, dass sie eigentlich Daten mit einem Netzwerkteilnehmer austauschen, welcher sich physisch nicht am lokalen Standort der Netzwerkinfrastruktur 210 befindet. Insbesondere kann Dank der durch die Koppeleinheit ermöglichten Emulation der weitere Netzwerkteilnehmer, welcher sich physisch nicht am lokalen Standort der ersten Netzwerkinfrastruktur befindet, in die erste Netzwerkinfrastruktur eingebunden werden, ohne dass zuvor die oben erwähnten Mittel wie Fernwirkprotokoll, VPN-Tunnel und dynamisches DNS einzurichten sind, wodurch sich der Aufwand für Konfiguration, Administration und Wartung stark reduziert.

Dies wird insbesondere auch dadurch erreicht, dass bevorzugter Weise in der Koppeleinheit 214 wenigstens eine Identifizierungsinformation der Koppeleinheit und wenigstens eine Identifizierungsinformation der Cloud-Computing-Infrastruktur 290 hinterlegt ist. Insbesondere sind diesbezüglich in einem Speicherbereich der Koppeleinheit 214 eine sogenannte UID (engl. für user identifier, unit identifier oder unique identifier) der Koppeleinheit, zum Beispiel deren MAC-Adresse (engl.: media access control), und eine UID der Cloud-Computing-Infrastruktur, zum Beispiel die MAC-Adresse, die IP-Adresse oder der Name eines Servers der Cloud-Computing-Infrastruktur, hinterlegt bzw. gespeichert. Die Koppeleinheit 214 ist somit bereits vorkonfiguriert für eine Verbindung bzw. Verbindungsaufnahme mit einer vorbestimmten Cloud-Computing-Infrstruktur, hier der Cloud-Computing-Infrastruktur 280. Ferner ist die Koppeleinheit 214 eingerichtet und ausgebildet, das Vorhandensein einer Verbindung an der zweiten Schnittstelle 214.2 zu detektieren und bei detektiertem Vorhandensein einer Verbindung an der zweiten Schnittstelle 214.2 unter Verwendung der Identifizierungsinformation der Koppeleinheit und der Identifizierungsinformation der Cloud-Computing-Infrastruktur eine Datenübertragung mit der Cloud-Computing-Infrastruktur 280 zu initiieren, insbesondere automatisch bzw. selbstständig zu initiieren.

Besonders bevorzugt ist in der Koppeleinheit 214 eine Sicherheitsinformation hinterlegt und die Koppeleinheit 214 eingerichtet und ausgebildet, unter Verwendung der Sicherheitsinformation eine gesicherte Datenübertragung, und insbesondere eine verschlüsselte Datenübertragung, mit der Cloud-Computing-Infrastruktur 280 zu initiieren. Insbesondere ist diesbezüglich in einem Speicherbereich der Koppeleinheit 214 ein sogenanntes Sicherheitszertifikat hinterlegt bzw. gespeichert. Diese Sicherheitszertifikat kann zum Beispiel vom Anbieter bzw. Betreiber der Cloud-Computing-Infrastruktur 280 ausgestellt worden sein. Mittels dieses Sicherheitszertifikats kann zum einen sich die Koppeleinheit 214 gegenüber der Cloud-Computing-Infrastruktur 280 authentifizieren und also belegen, dass sie für eine Datenübertragung mit der Cloud-Computing-Infrastruktur 280 zugelassen ist. Zum anderen kann auf Basis dieses Sicherheitszertifikats eine verschlüsselte Datenübertragung zwischen der Koppeleinheit und der Cloud-Computing-Infrastruktur erfolgen. Als Verschlüsselungsmechanismus ist dabei insbesondere TLS (engl.: transport layer security) vorgesehen sein.

Die Datenübertragung zwischen der Koppeleinheit 214 und der Cloud-Computing-Infrastruktur 280 bzw. der Cloud-Computing-basierenden Applikation, welche innerhalb der Cloud-Computing-Infrastruktur 280 ausgeführt wird, über das Weitverkehrsnetz 290, welches hier das Internet ist, erfolgt gemäß für das Internet typischer Protokolle und Mechanismen wie TCP/IP und HTTP bzw. HTTPS, wenn der Verschlüsselungsmechanismus TLS zum Einsatz kommt. Die Cloud-Computing-basierende Applikation ist dabei zweckmäßig als Webservice eingerichtet, mit wenigstens einer definierten Webserviceschnittelle für die Maschine-zu-Maschine-Kommunikation insbesondere mit der Koppeleinheit 214. Für die Werbservice-bezogene Datenübertragung kommen weitere insbesondere XML-basierende Protokolle und Mechanismen wie z.B. WSDL (engl.: web services description language), SOAP (ursprünglich engl.: simple object access protocol bzw. service oriented architecture protocol) und/oder REST (engl.: representational state transfer) zum Einsatz, welche im Protokollstapel auf HTTP bzw. HTTPS aufsetzen.

Während also innerhalb der Netzwerkinfrastruktur 210 zwischen allen Netzwerkteilnehmern 211, 212, 213, insbesondere einschließlich des weiteren emulierten Netzwerkteilnehmers 215, Daten gemäß einem gemeinsamen ersten Kommunikationsprotokoll, hier einem Profinet-spezifischen Protokoll übertragen werden, erfolgt die Datenübertragung zwischen der Koppeleinheit 214 und der Cloud-Computing-Infrastruktur 280 gemäß wenigstens eines anderen Kommunikationsprotokolls, welches sich von dem Kommunikationsprotokoll der Netzwerkinfrastruktur 210 unterscheidet. Für die geeignete Protokollumsetzung ist die Koppeleinheit zuständig, die Netzwerkteilnehmer 211, 212, 213 du 215 bleiben hiervon unbehelligt. Hinsichtlich des Kommunikationsprotokolls für eine Datenübertragung innerhalb der Netzwerkinfrastruktur 210 sind vorteilhafter Weise also keine Änderungen oder Anpassungen erforderlich, um eine Datenübertragung auch mit dem emulierten Netzwerkteilnehmer 215 zu ermöglichen.

Die **Figur 3** zeigt beispielhaft eine schematische Darstellung eines Netzwerksystems 200 in einer weiteren erfindungsgemäßen Ausführungsform.

Im Unterschied zum Beispiel gemäß Figur 2 emuliert die Koppeleinheit 214 in diesem Beispiel zwei weitere Netzwerkteilnehmer für die Netzwerkinfrastruktur 210. Neben dem Netzwerkteilnehmer 215 ist dies außerdem der Netzwerkteilnehmer 216.

Der emulierte Netzwerkteilnehmer 216 repräsentiert dabei den zu einer an einem dritten Standort, der ebenfalls geografisch entfernt von dem ersten Standort liegt, installierten weiteren Netzwerkinfrastruktur 230 gehörenden Netzwerkteilnehmer 236. Von der Netzwerkinfrastruktur 230 ist in Figur 3 auch nur der Netzwerkteilnehmer 236 gezeigt, welcher ebenfalls an das Weitverkehrsnetz 290 angeschlossen und somit auch mit der Cloud-Computing-Infrastruktur 280 verbunden ist. Die logische Verbindung zwischen dem Netzwerkteilnehmer 236 und dem emulierten Netzwerkteilnehmer 216 ist in der Figur 3 als gestrichelte Linie dargestellt. Das Emulieren des Netzwerkteilnehmers 236 als Netzwerkteilnehmer 216 erfolgt durch die Koppeleinheit 214 in vergleichbarer Weise wie bereits oben für das Emulieren des Netzwerkteilnehmers 225 als Netzwerkteilnehmer 215 beschrieben.

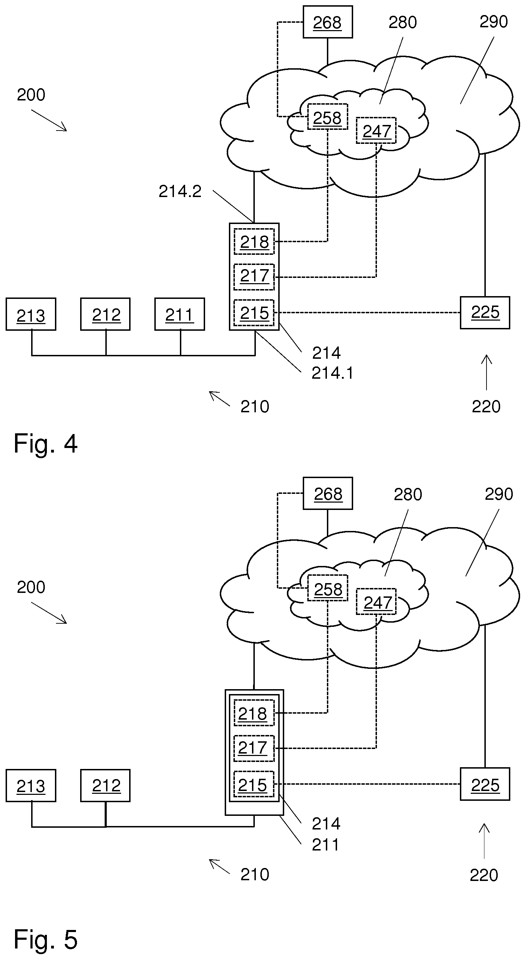

Die **Figur 4** zeigt beispielhaft eine schematische Darstellung eines Netzwerksystems 200 in einer weiteren erfindungsgemäßen Ausführungsform.

Im Unterschied zum Beispiel gemäß Figur 2 emuliert die Koppeleinheit 214 in diesem Beispiel drei weitere Netzwerkteilnehmer für die Netzwerkinfrastruktur 210. Neben dem Netzwerkteilnehmer 215 sind dies außerdem die Netzwerkteilnehmer 217 und 218.

Der emulierte Netzwerkteilnehmer 215 repräsentiert den physisch existierenden Netzwerkteilnehmer 225, welcher sich jedoch innerhalb der Netzwerkinfrastruktur 220 an einem geografisch entfernt liegenden Ort befindet.

Der emulierte Netzwerkteilnehmer 217 hingegen repräsentiert in diesem Beispiel einen physisch gar nicht existierenden Netzwerkteilnehmer. Vielmehr ist der von dem emulierten Netzwerkteilnehmer 217 repräsentierte Netzwerkteilnehmer 247 rein virtueller Natur und stellt zum Beispiel lediglich eine Schnittstelle zum Empfangen und/oder Ausgeben von Daten zur Verfügung. Hinter dem virtuellen Netzwerkteilnehmer 247 kann sich daher beispielsweise ein Datenspeicher, eine SQL-Datenbank, eine Webanwendung, ein Webservice, ein Simulator, eine Rechenkapazität oder ein Messagingdienst für SMS, E-Mail, Twitter oder Facebook verbergen, wobei all dies innerhalb der Cloud-Computing-Infrastruktur 280 oder auch außerhalb dieser angesiedelt sein kann. Sorgt die Koppeleinheit 214, wie in Bezug auf Fig. 2 bereits ausgeführt, dafür, dass Ausgangsdaten des Netzwerkteilnehmers 247 auch zum Netzwerkteilnehmer 217 weitergeleitet werden und daraufhin als dessen Ausgangsdaten in der Netzwerkinfrastruktur 210 bereitstehen, und zweckmäßig auch dafür, dass Eingangsdaten für den Netzwerkteilnehmer 217 auch zum Netzwerkteilnehmer 247 weitergeleitet werden, werden hierdurch die bei diesen beiden Netzwerkteilnehmern 217 und 247 jeweils vorliegenden Daten, insbesondere einschließlich Gerätebeschreibungsdaten, wenn auch zeitversetzt aktualisiert.

Beispielsweise kann der virtuelle Netzwerkteilnehmer 247 Wetterdaten wie Temperaturwerte, Sonnenstunden oder Sonnenstand, Niederschlagsmengen oder Windgeschwindigkeiten und -richtungen oder Unwetterwarnungen liefern, die er im Hintergrund von einem Wetterdatenwebservice bezieht. Der virtuelle Netzwerkteilnehmer 247 ist dann mittels der Cloud-Computing-basierenden Applikation der Koppeleinheit 214 zuordenbar, so dass die Koppeleinheit 214 über den emulierten Netzwerkteilnehmer 217 diese Wetterdaten dann auch den anderen Netzwerkteilnehmern der Netzwerkinfrastruktur 210 weiterleiten kann. Der emulierte Netzwerkteilnehmer 217 erscheint der Steuerungseinrichtung 111 oder den Feldgeräte 112 und 113 des automatisierten industriellen Prozesses, dann als ein Wettersensor, dessen Ausgangsdaten die Steuerung 111 nutzt, um die als Aktoren ausgebildeten Feldgerät 212 und 213 derart zu steuern, dass Photovoltaikmodule eines Solarparks nach dem Sonnenstand ausgerichtet und bei drohendem Unwetter in eine sichere Position geklappt werden, dass der Rotor einer Windkraftanlage bei zu starkem Wind gebremst wird, oder dass bei Einsatz der Dämmerung die Raumbeleuchtung eingeschaltet wird.

In einem anderem Beispiel kann der virtuelle Netzwerkteilnehmer 247 Zugang zu einem Datenspeicher bereitstellen, der sich auf der Festplatte eines Webservers befindet. Der entsprechende durch die Koppeleinheit 214 emulierte Netzwerkteilnehmer 217 würde dann für die anderen Netzwerkteilnehmern der Netzwerkinfrastruktur 210 als Speichereinheit bereitstehen, die beispielsweise für das Logging von E/A-Daten mit theoretisch unbegrenztem Datenvolumen nutzbar wäre.

Der emulierte Netzwerkteilnehmer 218 wiederum repräsentiert den Netzwerkteilnehmer 258, welcher hybrider Natur ist, das heißt er ist zum Teil virtueller Natur, bezieht aber zum Teil auch Daten physisch existierender Netzwerkteilnehmer mit ein, hier des Netzwerkteilnehmers 268, welcher zu einer an einem vierten Standort, der ebenfalls geografisch entfernt von dem ersten Standort liegt, installierten weiteren Netzwerkinfrastruktur 260 gehört und welcher ebenfalls an das Weitverkehrsnetz 290 angeschlossen und somit auch mit der Cloud-Computing-Infrastruktur 280 verbunden ist. Zum Beispiel basierend auf sensorisch erfassten und übermittelten Daten des als Sensor ausgebildeten Netzwerkteilnehmers 268 erfolgen zunächst weitere Berechnungen, insbesondere innerhalb der Cloud-Computing-Infrastruktur 280 und möglicher Weise unter Einbeziehung weiterer von der Cloud-Computing-Infrastruktur 280 bereitgestellter Daten, bevor das Ergebnis als Ausgangsdaten des Netzwerkteilnehmers 258 vorliegt. Der hybride Netzwerkteilnehmer 258 ist mittels der Cloud-Computing-basierenden Applikation der Koppeleinheit 214 zugeordnet, so dass die Koppeleinheit 214 über den emulierten Netzwerkteilnehmer 218 auch die das Berechnungsergebnis enthaltenen Ausgangsdaten den anderen Netzwerkteilnehmern der Netzwerkinfrastruktur 210 weiterleiten kann. Mittels des hybriden Netzwerkteilnehmers 258 ist somit ein Cloud-Computing-basierendes Preprocessing von geeigneten Steuer-/Regelwerten möglich, die dann der Steuerungseinrichtung 111 oder den Feldgeräte 112 und 113 des automatisierten industriellen Prozesses weitergeleitet werden können.

Die logische Verbindung zwischen dem Netzwerkteilnehmer 247 und dem emulierten Netzwerkteilnehmer 217 sowie die logische Verbindung zwischen dem Netzwerkteilnehmer 258 und 268 und dem emulierten Netzwerkteilnehmer 218 ist in der Figur 4 als gestrichelte Linie dargestellt.

Die **Figur 5** zeigt beispielhaft eine schematische Darstellung eines Netzwerksystems 200 in einer weiteren erfindungsgemäßen Ausführungsform.

Im Unterschied zum Beispiel gemäß Figur 4 ist die Koppeleinheit 214 als eine Einheit innerhalb der Steuerungseinrichtung 211 ausgebildet, wobei die Koppeleinheit im wesentlichen als Softwareapplikation implementiert ist, die von der Steuerungseinrichtung 211 ausgeführt wird. In diesem Fall hat also die Steuerungseinrichtung neben einer ersten Schnittstelle für die Verbindung mit der Netzwerkinfrastruktur 210 eine zweite Schnittstelle für die Verbindung mit der Cloud-Computing-Infrastruktur 280, wobei beide Schnittstellen der Koppeleinheit 214 zur Verfügung stehen, so dass diese wiederum eine erste Schnittstelle und einer zweiten Schnittstelle aufweist, um mittels der ersten Schnittstelle mit der ersten Netzwerkinfrastruktur in Verbindung zu stehen und mittels der zweiten Schnittstelle mit der Cloud-Computing-Infrastruktur in Verbindung zu stehen.

Das erfindungsgemäße Verfahren zum Betreiben eines Netzwerkssystems wird nachfolgend anhand des in Figur 3 gezeigten Beispiels des Netzwerksystems 200 sowie anhand der Figuren 6, 7 und 8, welche beispielhaft schematische Darstellungen der grafischen Bedienoberfläche der mit der Koppeleinheit 214 zusammenwirkenden Cloud-Computing-basierenden Applikation in verschiedenen Stadien zeigen, erläutert.

Ein praktischer Anwendungsfall für das in Figur 3 gezeigte Beispiel kann etwa wie folgt aussehen: Ein zentrales Wasserwerk (nicht explizit dargestellt) hat zwei ihm zugeordnete dezentrale Pumpstationen (ebenfalls nicht explizit dargestellt), welche jeweils mehrere Kilometer entfernt liegen. Diese Pumpenstationen versorgen bei Bedarf das zentrale Wasserwerk mit Wasser.

Die Netzwerkinfrastruktur 210 ist dabei im zentralen Wasserwerk installiert, die Steuerungseinrichtung 211 ist z.B. vom Typ AXC 3050, wie er von der Anmelderin angeboten wird. Über einen insbesondere Profinet-basierenden Bus ist die Steuerung 211 mit den Netzwerkteilnehmern 212 und 213 verbunden. Die Netzwerkinfrastrukturen 220 und 230 sind in je einer der Pumpstationen installiert, wobei die Netzwerkteilnehmer 225 und 236 z.B. als Steuerungseinrichtungen vom Typ AXC1050 ausgebildet sind, wie er ebenfalls von der Anmelderin angeboten wird. Die Anlage des zentralen Wasserwerkes wird also mit der zentralen Steuerungseinrichtung 211 gesteuert, die Pumpstationen werden je von einer dezentralen Steuerungseinrichtung 225 bzw. 236 gesteuert. Die dezentralen Steuerungseinrichtungen 225 bzw. 236 sind an das Weitverkehrsnetz 290 angeschlossen und stehen darüber mit der Cloud-Computing-Infrastruktur 280 in Verbindung.

Das erfindungsgemäße Verfahren z.B. zum Betreiben des Netzwerksystems 200 wie in Figur 3 gezeigt, bei dem die Netzwerkteilnehmer 225 und 236, welche sich physisch nicht am lokalen Standort der ersten Netzwerkinfrastruktur 210 befinden, in die Netzwerk ein werden können, umfasst nun zumindest die folgenden Schritte:
- Bereitstellen einer erfindungsgemäßen Koppeleinheit 214, welche eine erste Schnittstelle 214.1 und eine zweite Schnittstelle 214.2 aufweist,
- Verbinden der ersten Schnittstelle 214.1 der Koppeleinheit 214 mit der ersten Netzwerkinfrastruktur 210,
- Verbinden der zweiten Schnittstelle 214.2 der Koppeleinheit mit der Cloud-Computing-Infrastruktur 280 mit wenigstens einer Cloud-Computing-basierenden Applikation. Hier erfolgt die Verbindung über das Weitverkehrsnetz 290.
- Emulieren eines weiteren Netzwerkteilnehmers 215 für die erste Netzwerkinfrastruktur 210 durch die Koppeleinheit 214 in Zusammenwirken mit der Cloud-Computing-basierenden Applikation. Hier emuliert die Koppeleinheit 214 noch einen zweiten weiteren Netzwerkteilnehmer 216. Dabei entspricht hier der Netzwerkteilnehmer 215 dem Netzwerkteilnehmer 225, und der emulierte Netzwerkteilnehmer 216 entspricht dem Netzwerkteilnehmer 236.
- Übertragen von Daten zwischen dem Netzwerkteilnehmer 211 und dem weiteren Netzwerkteilnehmer 215 bzw. 216.

Sofern die Koppeleinheit 214 und die Netzwerkteilnehmer 225 und 236 der Cloud-Computing-basierenden Applikation bereits bekannt waren und die Netzwerkteilnehmer 225 und 236 der Koppeleinheit 214 bereits zugeordnet waren, bedarf es im Wesentlichen keiner weiteren Schritte.

Für die beiden Steuerungseinrichtungen 225 und 236 der dezentralen Pumpstationen werden automatisch durch die Koppeleinheit 214 entsprechende Netzwerkteilnehmer 215 und 216 emuliert. Im Fall der Profinet-basierenden Netzwerkstruktur 210 handelt es sich bei den emulierten Netzwerkteilnehmern 215 und 216 um sogenannte IO-Devices bzw. IO-Device-Instanzen, welche alle Profinet-Daten bereitstellen und den Zustand und die Daten der entfernten Pumpenstationen, welche sie repräsentieren, abbilden.

Die Cloud-Computing-basierende Applikation ist vorteilhafter Weise ausgebildet, eine Bedienoberfläche für die Einrichtung einer Koppeleinheit bereitzustellen. Diese Bedienoberfläche kann einer Bedienperson beispielsweise an einem mit der Cloud-Computing-Infrastruktur in Verbindung stehendem Bedienterminal innerhalb einer Webbrowserumgebung präsentiert werden. Als Bedienterminal kann zum Beispiel eine PC ein Tabletcomputer oder ein Smartphone genutzt werden. Die Einrichtung einer Koppeleinheit kann das Anmelden bzw. Bekanntmachen einer Koppeleinheit bei der Cloud-Computing-basierenden Applikation, das Anmelden bzw. Bekanntmachen eines Netzwerkteilnehmers bei der Cloud-Computing-basierende Applikation und das Zuordnen wenigstens eines Netzwerkteilnehmers zu einer Koppeleinheit umfassen. Im Folgenden kann je nach Einrichtungsaufgabe die Bedienoberfläche unterschiedlich ausgeprägt sein und stellt unterschiedliche Bedienelemente zur Verfügung.

Zwecks der Erläuterung der Einrichtungsschritte für eine Kopplereinheit und der hierzu bereitgestellten Bedienoberfläche der Cloud-Computing-basierende Applikation wird nachfolgend davon ausgegangen, dass die Koppeleinheit 214 und der Netzwerkteilnehmer 236 noch nicht bei der Cloud-Computing-basierende Applikation angemeldet bzw. bekannt sind, jedoch bereits an das Weitverkehrsnetz 290 angeschlossen sind. Ebenso sei der Netzwerkteilnehmer 225 bereits an das Weitverkehrsnetz 290 angeschlossen.

Bevor die Bedienperson irgendwelche Einrichtungstätigkeiten ausführen kann, muss sie sich, nachdem sie die grafische Bedienoberfläche der Cloud-Computing-basierenden Applikation zum Beispiel in einem Webbrowser auf einem Bedienterminal aufgerufen hat, mit einem Benutzernamen und Passwort authentifizieren um Zugriff auf die Einrichtungsfunktionalitäten zu erhalten.

Die **Figur 6** zeigt beispielhaft eine schematische Darstellung einer grafischen Bedienoberfläche der mit der Koppeleinheit 214 zusammenwirkenden Cloud-Computing-basierenden Applikation in verschiedenen Stadien während des Anmeldens bzw. Bekanntmachens der Koppeleinheit 214 bei der Cloud-Computing-basierende Applikation

Die obere Abbildung in der Figur 6 zeigt die Bedienoberfläche in der Ausprägung bzw. Ansicht 281. Im Abschnitt 281.1 werden die bereits angemeldeten Koppeleineinheiten namens "CloudKoppler1" bis "CloudKoppler3" aufgelistet. Aktuell ist der "CloudKoppler1" ausgewählt. Im Abschnitt 281.4 werden weitere Informationen zum "CloudKoppler1" angezeigt. Mittels der Schaltfläche 281.2 zum Hinzufügen einer weiteren Koppeleinheit gelangt die Bedienperson zu der in der mittleren Abbildung in der Figur 6 gezeigten Ansicht 282. In das Feld 282.1 gibt die Bedienperson die UID der Koppeleinheit 214 und in das Feld 282.2 einen Namen für die Koppeleinheit 214 hier also "CloudKoppler4" ein. Mittels der Schalfläche 282.3 startet die Bedienperson den Anmeldevorgang für die Koppeleinheit 214 und gelangt zunächst zu der in der unteren Abbildung in Figur 6 gezeigten Ansicht 283. Im Hintergrund nimmt die Cloud-Computing-basierende Applikation anhand der angegebenen UID Kontakt mit der Koppeleinheit 214 auf. Die Bedientperson muss nun aus Sicherheitsgründen ein an der Koppeleinheit 214 ausgebildetes Bestätigungselement aktivieren, um den Anmeldevorgang zu bestätigen. Über den Fortschritt des Anmeldevorgangs wird die Bedienperson durch den Fortschrittsbalken 283.1 informiert. Mittels der Schaltfläche 283.2 könnte die Bedienperson den Anmeldevorgang auch wieder abbrechen.

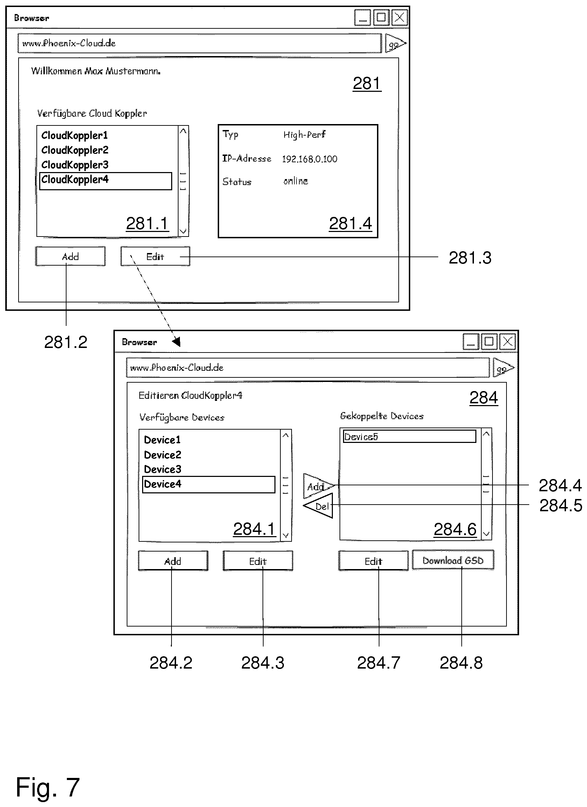

Die **Figur 7** zeigt beispielhaft eine schematische Darstellung der grafischen Bedienoberfläche der mit der Koppeleinheit 214 zusammenwirkenden Cloud-Computing-basierenden Applikation in verschiedenen Stadien während des Zuweisens der durch die Koppeleinheit 214 zu emulierenden Netzwerkteilnehmer 225 und 236.

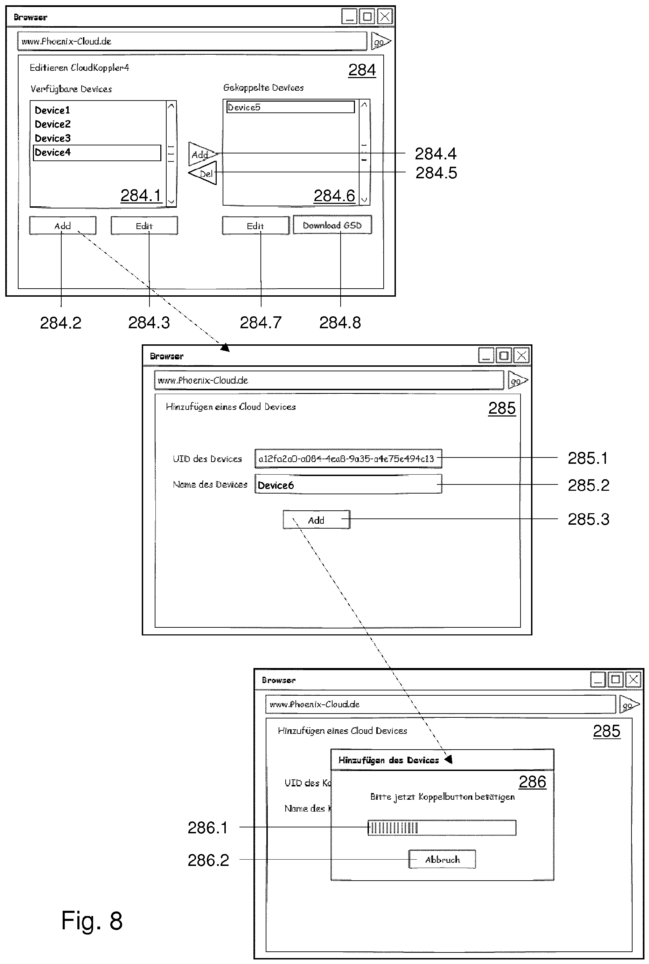

Die obere Abbildung in der Figur 7 zeigt die Bedienoberfläche wieder in der Ausprägung bzw. Ansicht 281. Im Abschnitt 281.1 wird nun auch die als "CloudKoppler4" benannte Koppeleinheit 214 aufgelistet. Aktuell ist der "CloudKoppler4" auch ausgewählt. Im Abschnitt 281.4 werden daher weitere Informationen zum "CloudKoppler4" angezeigt. Mittels der Schaltfläche 281.3 zum Bearbeiten der Einstellungen des "CloudKoppler4" gelangt die Bedienperson zu der in der unteren Abbildung in der Figur 7 gezeigten Ansicht 284. Im Abschnitt 284.1 sind die bereits bei der Cloud-Computing-basierenden Applikation angemeldeten Netzwerkteilnehmer namens "Device1" bis "Device4" aufgelistet, die der Koppeleinheit 214 zugeordnet werden könnten. Im Abschnitt 284.6 erscheint ein Netzwerkteilnehmer namens "Device5", welches hier der Netzwerkteilnehmer 225 ist. "Device5" wurde dem "CloudKoppler4", also der Koppeleinheit 214 bereits mittels der Schaltfläche 284.4 zugeordnet. Mittels der Schaltfläche 284.5 könnte die Bedienperson diese Zuordnung auch wieder aufheben. Mittels der Schaltfläche 284.3 bzw. 284.7 hätte die Bedienperson die Möglichkeit die Einstellungen des im Abschnitt 284.1 bzw. 284.6 ausgewählten Netzwerkteilnehmers zu bearbeiten. Mittels der Schaltfläche 284.8 kann die Bedienperson das Übertragen der Gerätebeschreibungsdaten von dem im Abschnitt 284.6 ausgewählten "Device5" also dem Netzwerkteilnehmer 225 an den aktuell ausgewählten "CloudKoppler4" also die Koppeleinheit 214 veranlassen. Mittels der Schaltfläche 284.2 kann die Bedienperson einen weiteren Netzwerkteilnehmer hinzufügen. Dies wird anhand der Figur 8 weiter erläutert.

Die **Figur 8** zeigt beispielhaft eine schematische Darstellung der grafischen Bedienoberfläche der mit der Koppeleinheit 214 zusammenwirkenden Cloud-Computing-basierenden Applikation in verschiedenen Stadien während des Anmeldens bzw. Bekanntmachens des Netzwerkteilnehmers 236 bei der Cloud-Computing-basierende Applikation.

Die obere Abbildung in der Figur 8 zeigt nochmals die Ansicht 284 der Bedienoberfläche. Mittels der Schaltfläche 284.2 gelangt die Bedienperson zu der in der mittleren Abbildung in der Figur 8 gezeigten Ansicht 285. In das Feld 285.1 gibt die Bedienperson die UID des Netzwerkteilnehmers 236 und in das Feld 285.2 einen Namen für den Netzwerkteilnehmer 236 hier also "Device6" ein. Mittels der Schalfläche 285.3 startet die Bedienperson den Anmeldevorgang für den Netzwerkteilnehmer 236 und gelangt zunächst zu der in der unteren Abbildung in Figur 8 gezeigten Ansicht 286. Im Hintergrund nimmt die Cloud-Computing-basierende Applikation anhand der angegebenen UID Kontakt mit dem Netzwerkteilnehmer 236 auf. Die Bedientperson muss nun aus Sicherheitsgründen ein auch an dem Netzwerkteilnehmer 236 ausgebildetes Bestätigungselement aktivieren um den Anmeldevorgang zu bestätigen. Über den Fortschritt des Anmeldevorgangs wird die Bedienperson durch den Fortschrittsbalken 286.1 informiert. Mittels der Schaltfläche 286.2 könnte die Bedienperson den Anmeldevorgang auch wieder abbrechen.

Nach erfolgreicher Anmeldung des Netzwerkteilnehmers 236 würde dieser als "Device6" in der Ansicht 284 zunächst im Abschnitt 284.1 erscheinen und könnte dann mittels der Schaltfläche 284.4 der Koppeleinheit 214 ebenfalls zugeordnet werden. Nachdem die Bedienperson mittels der Schaltfläche 284.8 das Übertragen der Gerätebeschreibungsdaten von dem "Device6", also dem Netzwerkteilnehmer 236, an den aktuell ausgewählten "CloudKoppler4", also die Koppeleinheit 214, veranlasst, wäre die Einrichtung der Koppeleinheit 214 abgeschlossen. Die Koppeleinheit 214 wäre somit in der Lage, die Netzwerkteilnehmer 225 und 236 in Zusammenwirken mit der Cloud-Computing-basierenden Applikation zu emulieren und als Netzwerkteilnehmer 215 und 216 in die Netzwerkinfrastruktur 210 einzubinden.

Die Bedienperson kann dann in ihrem gewohntem Engineeringtool, wie zum Beispiel PCWORX, die Netzwerkinfrastruktur 210 konfigurieren. Für die Bedienperson stellt es sich nun dar, als seien die beiden Steuerungseinrichtungen 225 und 236 der dezentralen Pumpstationen ebenso wie die zentrale Steuerungseinrichtung des Wasserwerks Teilnehmer der lokalen Netzwerkstruktur.

Erfindungsgemäß ist ferner bevorzugt vorgesehen, die Bedienoberfläche der Cloud-Computing-basierenden Applikation ergänzend oder alternativ zur Anzeige in einem Webbrowser direkt innerhalb des Engineerings zu präsentieren. Dies erleichtert das Engineering von Automatisierungsprozessen, die sich über die Grenzen einer lokalen Netzwerkinfrastruktur eines Standortes hinaus erstrecken nochmals deutlich.

Durch die Erfindung und insbesondere durch die Koppeleinheit kann zudem auch das Problem behoben werden, dass der Ausfall des Weitverkehrsnetzes gemäß Stand der Technik unmittelbar zum Stoppen des gesamten Automatisierungsprozesses führt, weil bestimmte Daten entfernt liegender Netzwerkteilnehmer in der lokalen Netzwerkinfrastruktur nicht innerhalb einer protokollspezifisch definierten Zeitspanne bzw. nicht zu einem protokollspezifisch definierten Zeitpunkt vorliegen.

Da durch die erfindungsgemäße Koppeleinheit die entfernt liegenden Netzwerkteilnehmer innerhalb der lokalen Netzwerkinfrastruktur emuliert werden, liegen bezüglich protokoll-spezifischer Anforderungen stets gültige Daten vor und der Automatisierungsprozess kann weitergeführt werden, auch wenn die Datenverbindung zu den entfernt liegenden Netzwerkteilnehmern gestört ist. Die von der Koppeleinheit emulierten Netzwerkteilnehmer geben stets die zuletzt empfangenen Daten aus. Bedarfsweise wären hier jedoch Maßnahmen zu treffen, die das Vorliegen veralteter Daten erkennen und geeignete Sicherheitsreaktionen auslösen.

### Bezugszeichenliste

- 100: Netzwerksystem
- 110: Netwerkinfrastruktur
- 111: Netzwerkteilnehmer, Steuerungseinrichtung
- 112: Netzwerkteilnehmer, Feldgerät
- 113: Netzwerkteilnehmer, Feldgerät
- 119: VPN-Gateway
- 120: Netzwerkinfrastruktur
- 121: Netzwerkteilnehmer, Steuerungseinrichtung
- 122: Netzwerkteilnehmer, Feldgerät
- 123: Netzwerkteilnehmer, Feldgerät
- 129: VPN-Gateway
- 190: Weitverkehrsnetz, Internet
- 200: Netzwerksystem
- 210: Netwerkinfrastruktur
- 211: Netzwerkteilnehmer, Steuerungseinrichtung
- 212: Netzwerkteilnehmer, Feldgerät
- 213: Netzwerkteilnehmer, Feldgerät
- 214: Koppeleinheit
- 214.1: erste Schnittstelle
- 214.2: zweite Schnittstelle
- 215: emulierter Netzwerkteilnehmer
- 216: emulierter Netzwerkteilnehmer
- 217: emulierter Netzwerkteilnehmer
- 218: emulierter Netzwerkteilnehmer
- 220: Netzwerkinfrastruktur
- 225: Netzwerkteilnehmer
- 230: Netzwerkinfrastruktur
- 236: Netzwerkteilnehmer
- 247: Netzwerkteilnehmer, virtuell
- 258: Netzwerkinfrastruktur, hybrid
- 268: Netzwerkteilnehmer
- 280: Cloud-Computing-Infrastruktur
- 281-286: Ansichten der Bedienoberfläche
- 290: Weitverkehrsnetz, Internet

## Patentansprüche

1. Netzwerksystem (200) umfassend
- eine erste Netzwerkinfrastruktur (210) mit wenigstens einem ersten, als Steuerungseinrichtung ausgebildeten Netzwerkteilnehmer (211).
- eine Cloud-Computing-Infrastruktur (280) mit wenigstens einer Cloud-Computing-basierenden Applikation, wobei die Cloud-Computing-basierende Applikation von der Cloud-Computing-Infrastruktur bereitgestellt und ausgeführt wird,
- sowie eine Koppeleinheit (214) mit einer ersten Schnittstelle (214.1) und einer zweiten Schnittstelle (214.2),
wobei die Koppeleinheit mittels der ersten Schnittstelle mit der ersten Netzwerkinfrastruktur in Verbindung steht und mittels der zweiten Schnittstelle mit der Cloud-Computing-Infrastruktur in Verbindung steht,
und wobei die Koppeleinheit eingerichtet und ausgebildet ist, in Zusammenwirken mit der Cloud-Computing-basierenden Applikation wenigstens einen weiteren Netzwerkteilnehmer (215) in der ersten Netzwerkinfrastruktur zu emulieren.
so dass Daten zwischen dem wenigstens ersten Netzwerkteilnehmer und dem emulierten weiteren Netzwerkteilnehmer der ersten Netzwerkinfrastruktur innerhalb der ersten Netzwerkinfrastruktur übertragen werden können, wobei der emulierte weitere Netzwerkteilnehmer einen Netzwerkteilnehmer (225) repräsentiert, der
- ein Netzwerkteilnehmer einer von der ersten Netzinfrastruktur entfernten Netzwerkinfrastruktur (220) ist oder
- rein virtueller Natur ist oder
- hybrider Natur ist, und
wobei Daten zwischen dem emulierten weiteren Netzwerkteilnehmer (215) der ersten Netzwerkinfrastruktur und dem von diesem emulierten weiteren Netzwerkteilnehmer repräsentierten Netzwerkteilnehmer (225) über die Cloud-Computing-Infrastruktur weitergeleitet werden können.

2. Netzwerksystem nach Anspruch 1,
wobei die erste Netzwerkinfrastruktur ein Feldbus ist und/oder,
wobei die erste Netzwerkinfrastruktur bevorzugt wenigstens einen zweiten Netzwerkteilnehmer umfasst, der als Feldgerät ausgebildet ist und/oder,
wobei innerhalb der ersten Netzwerkinfrastruktur zwischen allen Netzwerkteilnehmern Daten gemäß einem gemeinsamen ersten Kommunikationsprotokoll übertragen werden und/oder,
wobei die Cloud-Computing-basierende Applikation ausgebildet und geeignet ist, eine Bedienoberfläche für die Einrichtung der wenigstens einen Koppeleinheit bereitzustellen.

3. Netzwerksystem nach einem der Ansprüche 1 bis 2,
wobei die Koppeleinheit eine Einheit innerhalb der Steuerungseinrichtung ist oder wobei die Koppeleinheit als separate Einheit ein zweiter oder dritter Netzwerkteilnehmer der ersten Netzwerkinfrastruktur ist und der emulierte weitere Netzwerkteilnehmer ein dritter bzw. vierter Netzwerkteilnehmer der ersten Netzwerkinfrastruktur ist.

4. Netzwerksystem nach einem der Ansprüche 1 bis 3,
wobei die Koppeleinheit mittels der zweiten Schnittstelle mit der Cloud-Computing-Infrastruktur über eine zwischengeschaltete zweite Netzwerkinfrastruktur in Verbindung steht.

5. Netzwerksystem nach Anspruch 4,
wobei innerhalb der zweiten Netzwerkinfrastruktur Daten gemäß einem zweiten Kommunikationsprotokoll übertragen werden.

6. Netzwerksystem nach einem der Ansprüche 1 bis 5,
wobei die Cloud-Computing-Infrastruktur ferner mit einer dritten Netzwerkinfrastruktur in Verbindung steht, und wobei die Cloud-Computing-basierende Applikation ferner mit wenigstens einem Netzwerkteilnehmer einer dritten Netzwerkinfrastruktur zusammenwirkt.

7. Netzwerksystem nach Anspruch 6,
wobei der Netzwerkeilnehmer der dritten Netzwerkinfrastruktur durch den emulierten weiteren Netzwerkteilnehmer in der ersten Netzwerkinfrastruktur repräsentiert wird.

8. Koppeleinheit (214) für ein Netzwerksystem (200), welche eine erste Schnittstelle (214.1) und eine zweite Schnittstelle (214.2) aufweist,
wobei die Koppeleinheit mittels der ersten Schnittstelle mit einer ersten Netzwerkinfrastruktur (210) verbindbar ist und mittels der zweiten Schnittstelle mit einer Cloud-Computing-Infrastruktur (280) verbindbar ist,
und wobei die Koppeleinheit eingerichtet und ausgebildet ist, in Zusammenwirken mit einer von der Cloud-Computing-Infrastruktur bereitgestellten und ausgeführten Cloud-Computing-basierenden Applikation wenigstens einen Netzwerkteilnehmer in der ersten Netzwerkinfrastruktur zu emulieren, so dass Daten des emulierten weiteren Netzwerkteilnehmers (215) der ersten Netzwerkinfrastruktur innerhalb der ersten Netzwerkinfrastruktur übertragen werden können.
wobei der emulierte Netzwerkteilnehmer einen Netzwerkteilnehmer repräsentiert, der
- ein Netzwerkteilnehmer (225) einer von der ersten Netzinfrastruktur entfernten Netzwerkinfrastruktur (220) ist oder
- rein virtueller Natur ist oder
- hybrider Natur ist, und
wobei zwischen dem emulierten weiteren Netzwerkteilnehmer (215) und dem von diesem emulierten weiteren Netzwerkteilnehmer repräsentierten Netzwerkteilnehmer (225) Daten über die Cloud-Computing-Infrastruktur übertragbar sind.

9. Koppeleinheit nach Anspruch 8,
wobei in der Koppeleinheit eine Identifizierungsinformation der Koppeleinheit und eine Identifizierungsinformation der Cloud-Computing-Infrastruktur hinterlegt sind.

10. Koppeleinheit nach Anspruch 9,
wobei die Koppeleinheit eingerichtet und ausgebildet ist, das Vorhandensein einer Verbindung an der zweiten Schnittstelle zu detektieren und bei detektiertem Vorhandensein einer Verbindung an der zweiten Schnittstelle unter Verwendung der Identifizierungsinformation der Koppeleinheit und der Identifizierungsinformation der Cloud-Computing-Infrastruktur eine Datenübertragung mit der Cloud-Computing-Infrastruktur zu initiieren.

11. Koppeleinheit nach Anspruch 10,
wobei in der Koppeleinheit eine Sicherheitsinformation hinterlegt ist, und die Koppeleinheit eingerichtet und ausgebildet ist, unter Verwendung der Sicherheitsinformation eine gesicherte Datenübertragung mit der Cloud-Computing-Infrastruktur zu initiieren.

12. Koppeleinheit nach einem der Ansprüche 10 oder 11,
wobei die Koppeleinheit ein Bestätigungselement bereitstellt, welches aktiviert werden kann, um bei Vorhandensein einer Verbindung an der zweiten Schnittstelle eine von der Cloud-Computing-Infrastruktur initiierte Datenübertragung zu bestätigen.

13. Koppeleinheit nach einem der Ansprüche 8 bis 12,
wobei die Koppeleinheit eine Einheit innerhalb einem als Steuerungseinrichtung ausgebildeten ersten Netzwerkteilnehmer der ersten Netzwerkinfrastruktur ist oder als separate Einheit ein zumindest zweiter Netzwerkteilnehmer für die erste Netzwerkinfrastruktur ist.

14. Verfahren zum Betreiben eines Netzwerksystems (200), welches eine erste Netzwerkinfrastruktur (210) mit wenigstens einem ersten Netzwerkteilnehmer (211) aufweist, umfassend die Schritte:
- Bereitstellen einer erfindungsgemäßen Koppeleinheit (214), welche eine erste Schnittstelle (214.1) und eine zweite Schnittstelle (214.2) aufweist,
- Verbinden der ersten Schnittstelle der Koppeleinheit mit der ersten Netzwerkinfrastruktur,
- Verbinden der zweiten Schnittstelle der Koppeleinheit mit einer Cloud-Computing-Infrastruktur (280) mit wenigstens einer Cloud-Computing-basierenden Applikation,
- Emulieren eines weiteren Netzwerkteilnehmers (215) in der ersten Netzwerkinfrastruktur durch die Koppeleinheit in Zusammenwirken mit der von der Cloud-Computing-Infrastruktur bereitgestellten und ausgeführten Cloud-Computing-basierenden Applikation,
wobei der emulierte weitere Netzwerkteilnehmer einen Netzwerkteilnehmer repräsentiert, der
- ein Netzwerkteilnehmer (225) einer von der ersten Netzinfrastruktur entfernten Netzwerkinfrastruktur (220) ist,
- rein virtueller Natur ist oder
- hybrider Natur ist,
- Übertragen von Daten zwischen dem wenigstens ersten Netzwerkteilnehmer (211) und dem emulierten weiteren Netzwerkteilnehmer (215) innerhalb der ersten Netzwerkinfrastruktur und Übertragen von Daten zwischen dem emulierten weiteren Netzwerkteilnehmer und dem von diesem emulierten weiteren Netzwerkteilnehmer repräsentierten Netzwerkteilnehmer (225) über die Cloud-Computing-Infrastruktur.

15. Verfahren nach Anspruch 14,
wobei innerhalb der ersten Netzwerkinfrastruktur zwischen allen Netzwerkteilnehmern Daten gemäß einem gemeinsamen ersten Kommunikationsprotokoll übertragen werden.

## Claims

1. Network system (200), comprising:
- a first network infrastructure (210) having at least one first network participant (211) that is configured as a control device;
- a cloud computing infrastructure (280) having at least one cloud computing-based application, the cloud computing-based application is being provided and executed by the cloud computing infrastructure; and
- a coupling unit (214) having a first interface (214.1) and a second interface (214.2),
wherein the coupling unit is connected by means of the first interface to the first network infrastructure, and by means of the second interface to the cloud computing infrastructure,
and wherein, the coupling unit is equipped and designed to emulate at least one additional network participant (215) in the first network infrastructure, in interaction with the cloud computing-based application, and
so that data can be transmitted between the at least first network participant and the emulated additional network participant of the first network infrastructure within the first network structure,
wherein the emulated additional network participant represents a network participant (225), which is
- a network participant of a network infrastructure (220) remote from the first network infrastructure,
- of a purely virtual nature, or
- of a hybrid nature,
wherein data is forwardable between the emulated additional network participant (215) of the first network infrastructure and the network participant (225) represented by the emulated additional network participant via the cloud computing infrastructure.

2. Network system according to claim 1, wherein the first network infrastructure is a fieldbus
and/or
wherein the first network infrastructure comprises at least one second network participant, which is configured as a field device and/or
wherein data can be transmitted within the first network infrastructure between all of the network participants, in accordance with a shared first communication protocol and/or
wherein the cloud computing-based application is designed and adapted to provide a user interface for setting up the at least one coupling unit.

3. Network system according to any of claims 1 to 2, wherein the coupling unit is a unit within the control device, or wherein the coupling unit is a second or third network participant of the first network infrastructure, as a separate unit, and the emulated additional network participant is a third or fourth network participant of the first network infrastructure.

4. Network system according to any of claims 1 to 3, wherein the coupling unit is connected by means of the second interface to the cloud computing infrastructure via an intermediary second network infrastructure.

5. Network system according to claim 4, wherein data can be transmitted within the second network infrastructure in accordance with a second communication protocol.

6. Network system according to any of claims 1 to 5, wherein the cloud computing infrastructure is additionally connected to a third network infrastructure, and wherein the cloud computing-based application further interacts with at least one network participant of a third network infrastructure.

7. Network system according to claim 6, wherein the network participant of the third network infrastructure is represented by the emulated additional network participant in the first network infrastructure.

8. Coupling unit (214) for a network system (210), which comprises a first interface (214.1) and a second interface (214.2), wherein the coupling unit can be connected by means of the first interface to a first network infrastructure (210), and by means of the second interface to a cloud computing infrastructure (280), and wherein the coupling unit is equipped and designed to emulate at least one network participant in the first network infrastructure, in interaction with a cloud computing-based application being provided and executed by the cloud computing infrastructure,
so that data of the emulated additional network participant (215) of the first network infrastructure can be transmitted within the first network infrastructure,
wherein the emulated network participant represents a network participant, which is
- a network participant (225) of a network infrastructure (220) remote from the first network infrastructure,
- of a purely virtual nature, or
- of a hybrid nature,
and wherein data can be transmitted between the emulated additional network participant (215) and the network participant (225) represented by the emulated additional network participant via the cloud computing infrastructure.

9. Coupling unit according to claim 8, wherein identification information about the coupling unit and identification information about the cloud computing infrastructure are stored in the coupling unit.

10. Coupling unit according to claim 9, wherein the coupling unit is equipped and designed to detect the presence of a connection to the second interface and upon detection of the presence of a connection to the second interface to initiate data transmission with the cloud computing infrastructure, with the use of the identification information of the coupling unit and the identification information of the cloud computing infrastructure.

11. Coupling unit according to claim 10, wherein security information is stored within the coupling unit , and the coupling unit is equipped and designed to initiate secure data transmission to the cloud computing infrastructure with the use of the security information.

12. Coupling unit according to either of claims 10 or 11, wherein the coupling unit provides a confirmation element that can be activated in order to confirm a data transmission initiated from the cloud computing infrastructure in the presence of a connection to the second interface.

13. Coupling unit according to any of claims 8 to 12, wherein the coupling unit is a unit within a first network participant of the first network infrastructure configured as a control device, or is an at least second network participant, as a separate unit, for the first network infrastructure.

14. Method for operating a network system (200) which has a first network infrastructure (210) having at least one first network participant (211), comprising the following steps:
• providing a coupling unit (214) according to the invention, which comprises a first interface (214.1) and a second interface (214.2);
• connecting the first interface of the coupling unit to the first network infrastructure;
• connecting the second interface of the coupling unit to a cloud computing infrastructure (280) having at least one cloud computing-based application;
• emulating an additional network participant (215) in the first network infrastructure, by the coupling unit in interaction with the cloud computing-based application provided and executed cloud computing infrastructure,
wherein the emulated network participant represents a network participant, which is
- a network participant (225) of a network infrastructure (220) remote from the first network infrastructure,
- of a purely virtual nature, or
- of a hybrid nature,
• transmitting data between the at least first network participant (211) and the emulated additional network participant (215) within the first network structure, and transmitting data between the emulated additional network participant and the network participant (225) represented by the emulated additional network participant via the cloud computing infrastructure.

15. Method according to claim 14, wherein data can be transmitted within the first network infrastructure between all of the network participants, in accordance with a shared first communication protocol.

## Revendications

1. Système de réseau (200) comportant :
- une première infrastructure de réseau (210) comprenant au moins un premier abonné de réseau (211) réalisé sous la forme d'un dispositif de commande,
- une infrastructure d'informatique en nuage (280) comprenant au moins une application basée sur l'informatique en nuage, l'application basée sur l'informatique en nuage étant fournie et exécutée par l'infrastructure d'informatique en nuage,
- ainsi qu'une unité de couplage (214) comprenant une première interface (214.1) et une deuxième interface (214.2),
dans lequel l'unité de couplage est reliée à la première infrastructure de réseau au moyen de la première interface et à l'infrastructure d'informatique en nuage au moyen de la deuxième interface,
et dans lequel l'unité de couplage est conçue et configurée pour émuler, en coopération avec l'application basée sur l'informatique en nuage, au moins un autre abonné de réseau (215) dans la première infrastructure de réseau,
de sorte que les données entre l'au moins premier abonné de réseau et l'autre abonné de réseau émulé de la première infrastructure de réseau peuvent être transmises à l'intérieur de la première infrastructure de réseau,
dans lequel l'autre abonné de réseau émulé représente un abonné de réseau (225), qui
- est un abonné de réseau d'une infrastructure de réseau (220) distante de la première infrastructure de réseau ou
- est de nature purement virtuelle ou
- est de nature hybride, et
dans lequel les données peuvent être transmises entre l'autre abonné de réseau (215) émulé de la première infrastructure de réseau et l'abonné de réseau (225) représenté par cet autre abonné de réseau émulé par l'intermédiaire de l'infrastructure d'informatique en nuage.

2. Système de réseau selon la revendication 1,
dans lequel la première infrastructure de réseau est un bus de terrain
et/ou,
dans lequel la première infrastructure de réseau comporte de préférence au moins un deuxième abonné de réseau, qui est réalisé sous la forme d'un appareil de terrain
et/ou,
dans lequel les données sont transmises à l'intérieur de la première infrastructure de réseau entre tous les abonnés de réseau conformément à un premier protocole de communication commun
et/ou,
dans lequel l'application basée sur l'informatique en nuage est réalisée et adaptée pour fournir une surface de commande utilisateur au dispositif de l'au moins une unité de couplage.

3. Système de réseau selon l'une quelconque des revendications 1 à 2, dans lequel l'unité de couplage est une unité à l'intérieur du dispositif de commande ou dans lequel l'unité de couplage en tant qu'unité séparée est un deuxième ou troisième abonné de réseau de la première infrastructure de réseau et l'autre abonné de réseau émulé est un troisième ou quatrième abonné de réseau de la première infrastructure de réseau.

4. Système de réseau selon l'une quelconque des revendications 1 à 3, dans lequel l'unité de couplage est reliée à l'infrastructure d'informatique en nuage au moyen de la deuxième interface par l'intermédiaire d'une deuxième infrastructure de réseau intercalée.

5. Système de réseau selon la revendication 4, dans lequel les données sont transmises à l'intérieur de la deuxième infrastructure de réseau conformément à un deuxième protocole de communication.

6. Système de réseau selon l'une quelconque des revendications 1 à 5, dans lequel l'infrastructure d'informatique en nuage est reliée en outre à une troisième infrastructure de réseau, et dans lequel l'application basée sur l'informatique en nuage coopère en outre avec au moins un abonné de réseau d'une troisième infrastructure de réseau.

7. Système de réseau selon la revendication 6, dans lequel l'abonné de réseau de la troisième infrastructure de réseau est représenté par l'autre abonné de réseau émulé dans la première infrastructure de réseau.

8. Unité de couplage (214) pour un système de réseau (200), laquelle présente une première interface (214.1) et une deuxième interface (214.2),
l'unité de couplage pouvant être reliée à une première infrastructure de réseau (210) au moyen de la première interface et à une infrastructure d'informatique en nuage (280) au moyen de la deuxième interface,
et l'unité de couplage étant conçue et réalisée pour émuler, en coopération avec une application basée sur l'informatique en nuage fournie et réalisée par l'infrastructure d'informatique en nuage, au moins un abonné de réseau dans la première infrastructure de réseau, de sorte que les données de l'autre abonné de réseau (215) émulé de la première infrastructure de réseau peuvent être transmises à l'intérieur de la première infrastructure de réseau,
l'abonné de réseau émulé représentant un abonné de réseau, qui
- est un abonné de réseau (225) d'une infrastructure de réseau (220) distante de la première infrastructure de réseau ou
- est de nature purement virtuelle ou
- est de nature hybride, et
les données pouvant être transmises entre l'autre abonné de réseau (215) émulé et l'abonné de réseau (225) représenté par cet autre abonné de réseau émulé par l'intermédiaire de l'infrastructure d'informatique en nuage.

9. Unité de couplage selon la revendication 8, une information d'identification de l'unité de couplage et une information d'identification de l'infrastructure d'informatique en nuage étant mises en mémoire dans l'unité de couplage.

10. Unité de couplage selon la revendication 9, l'unité de couplage étant conçue et réalisée pour détecter la présence d'une liaison au niveau de la deuxième interface et, lorsque la présence d'une liaison au niveau de la deuxième interface est détectée, pour déclencher une transmission de données avec l'infrastructure d'informatique en nuage au moyen de l'information d'identification de l'unité de couplage et de l'information d'identification de l'infrastructure d'informatique en nuage.

11. Unité de couplage selon la revendication 10, une information de sécurité étant mise en mémoire dans l'unité de couplage, et l'unité de couplage étant conçue et réalisée pour déclencher une transmission de données sécurisée avec l'infrastructure d'informatique en nuage au moyen de l'information de sécurité.

12. Unité de couplage selon l'une quelconque des revendications 10 et 11, l'unité de couplage fournissant un élément de confirmation, lequel peut être activé afin de confirmer une transmission de données déclenchée par l'infrastructure d'informatique en nuage en présence d'une liaison au niveau de la deuxième interface.

13. Unité de couplage selon l'une quelconque des revendications 8 à 12, l'unité de couplage étant une unité à l'intérieur d'un premier abonné de réseau de la première infrastructure de réseau réalisé sous la forme d'un dispositif de commande ou, en tant qu'unité séparée, étant un au moins deuxième abonné de réseau pour la première infrastructure de réseau.

14. Procédé pour le fonctionnement d'un système de réseau (200), lequel comprend une première infrastructure de réseau (210) comprenant au moins un premier abonné de réseau (211), comportant les étapes de :
- fourniture d'une unité de couplage (214) selon l'invention, laquelle comprend une première interface (214.1) et une deuxième interface (214.2),
- liaison de la première interface de l'unité de couplage à la première infrastructure de réseau,
- liaison de la deuxième interface de l'unité de couplage à une infrastructure d'informatique en nuage (280) comprenant au moins une application basée sur l'informatique en nuage,
- émulation d'un autre abonné de réseau (215) dans la première infrastructure de réseau au moyen de l'unité de couplage en coopération avec l'application basée sur l'informatique en nuage fournie et exécutée par l'infrastructure d'informatique en nuage,
où l'autre abonné de réseau émulé représente un abonné de réseau, qui
- est un abonné de réseau (225) d'une infrastructure de réseau (220) distante de la première infrastructure de réseau ou
- est de nature purement virtuelle ou
- est de nature hybride, et
- transmission de données entre l'au moins premier abonné de réseau (211) et l'autre abonné de réseau (215) émulé à l'intérieur de la première infrastructure de réseau et transmission de données entre l'autre abonné de réseau émulé et l'abonné de réseau (225) représenté par cet autre abonné de réseau émulé par l'intermédiaire de l'infrastructure d'informatique en nuage.

15. Procédé selon la revendication 14, dans lequel les données sont transmises à l'intérieur de la première infrastructure de réseau entre tous les abonnés de réseau conformément à un premier protocole de communication commun.
